# NEUE EUROPÄISCHE PATENTSCHRIFT

(11) **EP 2 152 405 B2**
(45) Veröffentlichungstag und Bekanntmachung des Hinweises auf die Entscheidung über den Einspruch: **05.04.2017**
(45) Hinweis auf die Patenterteilung: 17.10.2012
(21) Anmeldenummer: 08758608.7
(22) Anmeldetag: 19.05.2008
(51) Int. Cl.: B01J 20/32, B01J 29/20, B01D 15/08

(54) **MISCHPFROPFPOLYMERE FÜR DIE KATIONENAUSTAUSCHCHROMATOGRAPHIE**
GRAFT COPOLYMER FOR CATION-EXCHANGE CHROMATOGRAPHY
COPOLYMÈRES GREFFÉS POUR LA CHROMATOGRAPHIE PAR ÉCHANGE DE CATIONS

(30) Priorität: 25.05.2007 EP 07010490
(43) Veröffentlichungstag der Anmeldung: 17.02.2010
(73) Patentinhaber: Merck Patent GmbH, 64293 Darmstadt (DE)
(72) Erfinder: GRAALFS, Heiner, 64372 Ober-Ramstadt (DE)
(86) Internationale Anmeldenummer: PCT/EP2008/003990
(87) Internationale Veröffentlichungsnummer: WO 2008/145270

(56) Entgegenhaltungen:
- EP-A- 0 337 144
- WO-A1-2004/082801
- CN-A- 1 595 143
- DE-A1- 38 110 420
- LEE, EUN ZOO ET AL: "Removal of bovine serum albumin using solid-phase extraction with in-situ polymerized stationary phase in a microfluidic device" JOURNAL OF CHROMATOGRAPHY, A , 1187(1-2), 11-17 CODEN: JCRAEY; ISSN: 0021-9673, 2008, XP002488270
- EMEK SEYREK ET AL: "Ionic strength dependence of protein-polyelectrolyte interactions" 2003, BIOMACROMOLECULES, AMERICAN CHEMICAL SOCIETY, US, PAGE(S) 273-282 , XP009092069 ISSN: 1525-7797 in der Anmeldung erwähnt Seite 274, Spalte 1, Absatz 2 - Spalte 2, Absatz 1

## Beschreibung

Die Erfindung betrifft ein Trennmaterial mit verbesserter Bindekapazität, dessen Herstellung und dessen Anwendung zur Abtrennung von geladenen Biopolymeren aus Flüssigkeiten.

### Stand der Technik

Für die Isolierung von Proteinen ist die Chromatographie eine der am besten geeigneten Methoden. Monoklonale Antikörper können zum Beispiel über eine Affinitätschromatographie mit Protein A Liganden gereinigt werden. Die Bindung an den Liganden aus dem Zellkulturüberstand ist möglich ohne Anpassung von pH-Wert und Salzkonzentration. Trotzdem sind diese Sorbentien durch ihre hohen Kosten und durch Ausbluten des Liganden nur eingeschränkt einsetzbar.

Der Einsatz hochkapazitiver lonenaustauscherharze ist eine günstige Alternative. Allerdings muss der Leitwert im Zellkulturüberstand reduziert werden, damit eine Bindung an den Ionenaustauscher erfolgt. Dies kann durch eine Entsalzung erfolgen oder durch Verdünnen des Überstandes. Beide Möglichkeiten sind insbesondere bei großvolumigen Produktionsprozessen unerwünscht.

In Anwesenheit von Salzen (hoher Leitwert) werden Ladungen abgeschirmt. Um trotzdem eine Bindung an einen Ionenaustauscher bei höherem Leitwert zu ermöglichen, muss neben der ionischen Wechselwirkung mindestens eine zweite Wechselwirkung zwischen dem Protein und dem Chromatographieträger vorhanden sein.

Trennmaterialien, die neben einer anionischen Gruppe weitere funktionelle Gruppen besitzen und Biopolymere in Anwesenheit von Salz binden, sind aus der Literatur bekannt.

Aus US 5,652,348 (Burton et al.) sind Chromatographieharze und deren Anwendung bekannt, die durch hydrophobe Modifizierung von ionisierbaren Liganden mit nicht-ionisierbaren Liganden erhalten werden. Dabei erfolgt die Bindung unter Bedingungen, die eine hydrophobe Interaktion unterstützt. Die Desorption findet bei einem anderen pH statt, so dass das Harz hydrophil wird bzw. eine Ladung erhält und das gebundene (gleichgeladene) Protein abgestoßen wird.

Burton et al. (Biotechnology and Bioengineering 1997, 56, 45-55) beschreiben die Reinigung von Chymosin auf einer Carboxymatrix, die teilweise durch Kupplung mit einem aromatischen Amin modifiziert worden ist.

In EP 1 094 899 wird ein Verfahren zur Abtrennung von Biomolekülen, insbesondere von Proteinen, mit Kationentauschern offenbart, das dadurch charakterisiert ist, dass die Bindung bei >15 mS/cm und die Elution bei höherer Ionenstärke erfolgt. Der kationenaustauschende Ligand ist dabei über die zweite funktionelle Gruppe und einen Spacer an eine Trägermatrix gebunden.

In US 7,067,059 wird ein Verfahren zur Herstellung von Chromatographiegelen mit Mixedmode-Kationenaustauscherliganden beansprucht, wobei die Herstellung unter Verwendung von cyclischen Homocysteinverbindungen erfolgt, die durch Ringöffnung zu Gruppierungen mit mindestens zwei funktionalen Gruppen führen.

In US 6,852,230 und EP 1 345 694 ist die Nutzung von Ionenaustauschern zur Bindung und Abtrennung von geladenen Biomolekülen mit Peptidstruktur beschrieben und beansprucht, wobei nach dem Desorptionsschritt eine salzfreie, bzw. salzärmere Lösung vorliegt, so dass gleichzeitig eine Entsalzung eintritt.

In US 7,008,542 wird ein Verfahren zur Abtrennung von einer Substanz, insbesondere von bioorganischen Molekülen mit einem Molekulargewicht von mehr als 1000 Dalton beansprucht, welches unter Verwendung einer Trägermatrix erfolgt. Letztere weist mindestens zwei strukturell unterschiedliche Liganden auf, wobei mindestens ein Ligand ein Ionenaustauscher ist. Typische Liganden haben eine Molmasse von <1000 Da.

In US 7,144,743 wird ein polycyclischer Ligand für die Chromatography beschrieben, der mit einer anionischen Gruppe substiuiert ist.

Funktionalisierte lineare Polymere, die durch Pfropfen entsprechender funktionalisierter Monomere auf eine Vielzahl unterschiedlicher Oberflächen erhalten werden, sind seit vielen Jahren bekannt. Wenn es sich bei der Funktionalisierung um chemisch gebundene anionische Gruppierungen handelt, können entsprechende Materialien für die Kationenaustauschchromatographie verwendet werden (W. Müller, J. Chromatography 1990, 510, 133-140). Eine größere Anzahl an möglichen Pfropfpolymerstrukturen, die für die Fraktionierung von Biopolymeren vorgesehen sind, findet sich in den Patenten EP 0 337 144 oder US 5,453,186 und DE 3811042. Auch Pfropfpolymere aus mehr als einem Monomerbaustein, die durch Copolymerisation erhalten werden, sind aus der Patentliteratur bekannt. Jedoch wird in der Literatur auf die Kombination der Monomere nur wenig eingegangen: Um geeignete Austauscher zu erhalten, müssen danach für die Copolymerisation die Monomere so gewählt werden, dass beide Monomere entweder basische oder saure Gruppen aufweisen oder eines der Monomere neutral ist. Ternäre Monomergemische oder chemische Modifizierungen der Pfropfpolymere sind nicht explizit erwähnt.

Die Wechselwirkung zwischen Proteinen und freien, bzw. löslichen, synthetischen Polyelektrolyten wie z.B. von hydrophob modifizierter Poly(acrylsäure) und BSA wurde in Biomacromolecules 2003, 4, 273-282 untersucht und diskutiert.

Es sind also aus der Patent- und Zeitschriftenliteratur viele Ansätze zur Modifizierung von Kationenaustauschern bekannt. Auch zur Herstellung von Adsorbentien mit Liganden, die mit gemischtem Modus arbeiten, sind verschiedene Methoden bekannt. Es gibt aber nur wenige kommerziell erhältliche Adsorbentien, die geeignet sind Proteine und insbesondere Antikörper aus Zellkulturüberständen zu binden.

Das in US 7,144,743 beschriebene Chromatographiegel, welches mit 2-Mercapto-5-benzimidazolsulfonsäure als Liganden derivatisiert ist, kann bis zu 30 mg/ml IgG binden. Durch eigene Messungen mit Gammanorm unter Verwendung eines entsprechenden Produkts, das im Handel unter dem Namen MBI HyperCel® vertrieben wird, wurde eine Bindung von 23 mg/ml bei pH 5 und 140 mM NaCl gefunden (10% Durchbruch).
Im Fall eines anderen Produkts, das von derselben Firma vertrieben wird, wird die hydrophobe ladungsinduzierte Chormatographie genutzt (Hydrophobic Charge Induction Chromatography, HCIC). Mit diesem Produkt kann bis ca. 32 mg/ml polyclonales humanes IgG gebunden werden.

Bei Verwendung eines anderen kommerziell erhältlichen Produkts, das unter dem Namen Capto MMC® vertrieben wird wurde für humanes IgG eine dynamische Bindekapazität (10% Durchbruch) von 7 mg/ml bei pH 5,5 und 150 mM NaCl gefunden. Zur Herstellung des in US 7,067,059 beschriebenen Produkts wird ein multimodaler Ligand verwendet. Dieses Gel wurde aber nicht speziell für Antikörper entwickelt und bindet 45 mg/ml BSA.

Darüber hinaus gibt es weitere im Handel erhältliche Produkte mit synthetischen Liganden, die Antikörper nur aus Puffer-Lösungen binden können. Bei Anwendung zur Behandlung von Zellkulturüberständen werden unbefriedigende bzw. keine Bindung erhalten. Wahrscheinlich wird dieses Ergebnis durch Komponenten im Zellkulturüberstand hervorgerufen, die sich störend verhalten.

Es besteht weiterhin ein Bedarf, Adsorbentien für die Aufreinigung von Antikörpern zur Verfügung zu stellen, die Vorteile bezüglich Kapazität, Durchsatz, Wirtschaftlichkeit oder Selektivität haben (J. Chromatography B 2007, 848, 48 - 63). Polymere sind an sich hervorragend für die Oberflächenmodifizierung von Chromatographieträgern geeignet, da eine breite Auswahl an funktionellen Gruppen, insbesondere auch zum Aufbau von multifunktionalen Materialien, zur Auswahl steht und dicke Schichten mit einer großen Zahl an funktionellen Gruppen aufgebaut werden können. Insbesondere durch die Belegung der Oberfläche mit einer "weichen" Polymerschicht können hochkapazitive Chromatographiematerialien erzeugt werden (J. Chromatography 1993, 631, 107 - 114).

Jedoch sind bisher keine Trennmaterialien bekannt, die sich durch ein einfach durchführbares Verfahren unter Einsatz preiswerter Ausgangsmaterialien herstellen lassen und in der Anwendung zur Auftrennung von Zellkulturüberständen oder anderen biologischen Flüssigkeiten ohne signifikante Reduzierung der Leitwerte derart hohe Trennaktivitäten aufweisen, insbesondere hinsichtlich auf monoklonale Antikörper, dass sie sich für eine Anwendung im technischen Massstab eignen würden.

### Aufgabenstellung

Aufgabe der vorliegenden Erfindung ist es daher, ein Trennmaterial bereit zu stellen, welches verbesserte Bindungskapazitäten für Proteine, insbesondere auch für Antikörper aus Zellkulturüberständen, aufweist und zum Einsatz im industriellen Maßstab für präparative Anwendungen geeignet ist.

Insbesondere besteht daher die Aufgabe der vorliegenden Erfindung darin, Materialien herzustellen, die bei einem Leitwert, wie er üblicherweise in Zellkulturüberständen vorliegt, unter sonst gleichen Bedingungen höhere Proteinbindungskapazitäten aufweisen als bisher kommerziell erhältliche Kationenaustauscher wie z. B. Fractogel^{®} EMD SO₃⁻ (M) oder Fractogel^{®} EMD COO- (M). Hierbei sollen die Proteinbindungskapazitäten hoch sein bei guter Wiederfindung des eingesetzten Proteins, wenn das Protein nur eine kurze Kontaktzeit mit dem Trennmaterial hat, insbesondere unter dynamischen Bedingungen, wie sie in chromatographischen Prozessen bei höheren Flussraten vorliegen. Ziel der vorliegenden Erfindung ist somit die Synthese eines salztoleranten Kationaustauschers und seine Anwendung in der Proteinaufreinigung.

Aufgabe der vorliegenden Erfindung ist es darüber hinaus, einen alkalistabilen Trennmaterial zur Verfügung zu stellen, durch den eine Reinigung bzw. Regeneration bei pH ≥ 13 ermöglicht wird, ohne die Eigenschaften des Trennmaterials wesentlich zu verändern.

### Lösung der erfindungsgemäßen Aufgabe und Gegenstand der Erfindung

In einer Ausführungsform betrifft die vorliegende Erfindung die Verwendung der Trennmaterialien für die lonenaustauschchromatographie in einer Ionenaustauschchromatographiesäule, wobei besagte Trennmaterialien für die lonenaustauschchromatographie auf der Grundlage von organischen, hydroxylgruppenhaltigen Polymerbasisträgern an der Oberfläche der Basisträger kovalent gebundene Mischpolymere aufweisen und a) der Basisträger aliphatische Hydroxylgruppen enthält, b) die kovalent gebundenen Mischpolymeren über eine endständige Monomereinheit an den Träger gebunden sind, c) die Mischpolymeren mindestens zwei verschiedene Monomereinheiten enthalten, d) die Monomereinheiten linear verknüpft sind, e) das Mischpolymer mindestens eine Monomereinheit, die eine negative Ladung in Form einer Sulfonsäure oder Carbonsäure trägt und daneben Ester- oder Amidgruppen und Alkyl- und/oder Alkylengruppen und insgesamt maximal 8 C-Atome aber keine Arylgruppen enthält, oder die eine negative Ladung in Form einer Sulfonsäure oder Carbonsäure trägt und daneben Alkyl- und/oder Alkylengruppen aber keine Arylgruppen enthält, f) das Mischpolymer mindestens eine Monomereinheit, die als hydrophobe Gruppe ein geradkettiges oder verzweigtes Alkyl mit bis zu 4 bis 18 C-Atomen oder entsprechende Arylgruppen trägt und Ester- oder Amidgruppen enthält und g) das Verhältnis der Monomereinheiten mit negativer Ladung zu den Monomereinheiten mit hydrophober Gruppe in einem Bereich von 99 : 1 bis 10 : 90 liegt.

Insbesondere betrifft die vorliegende Erfindung das Trennmaterial, welches an der Oberfläche des Polymerbasisträgers kovalent gebundenes Pfropfpolymer in Form eines Mischpolymers aufweist, wobei das Mischpolymer mindestens eine wasserlösliche Monomereinheit mit negativer Ladung der allgemeinen Formel (1) umfasst, 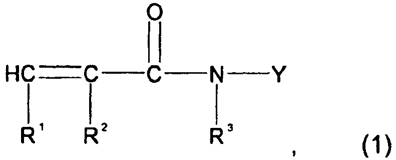 worin
- R¹, R² und Y: unabhängig voneinander
H oder CH₃,
- R³: R⁴-SO₃M oder R⁴-COOM,
- R⁴: geradkettiges oder verzweigtes Alkylen mit 2 bis 4 C-Atomen und
- M: H, Na, K oder NH₄
bedeuten
oder der allgemeinen Formel (2) 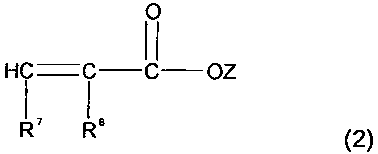 worin
- R⁷ und R⁸: unabhängig voneinander
H oder CH₃, oder
- R⁷: COOM, wenn Z =M und R⁸ =H,
- Z: entweder M, R⁴-COOM oder R⁴-SO₃M mit
- R⁴: geradkettiges oder verzweigtes Alkylen mit 2 bis 4 C-Atomen,
und
- M: H, Na, K oder NH₄
bedeuten,
oder mindestens jeweils einer Monomereinheit der allgemeinen Formel (1) und einer Monomereinheit der allgemeinen Formel (2)
und mindestens einer weiteren Monomereinheit mit hydrophober Gruppe der allgemeinen Formel (1), welche dem Mischpolymer einen hydrophoben Charakter verleiht und worin
- R¹: H oder COOM,
- R²: H oder CH₃,
- Y und R³: geradkettiges oder verzweigtes Alkyl mit bis zu 18 C-Atomen,
worin Y und R³ zusammen mindestens 6 C-Atome tragen,
oder
- Y: H
und
- R³: geradkettiges oder verzweigtes Alkyl mit 6 bis zu 18 C-Atomen oder
- Y: H
und
- R³: Aryl oder R⁶-Aryl
oder
- Y: H oder CH₃
und
- R³: R⁴-CONHX,
- X: geradkettiges oder verzweigtes Alkyl mit 6 bis 18 C-Atomen, Aryl oder R⁶-Aryl
- R⁴: geradkettiges oder verzweigtes Alkylen mit 2 bis 4 C-Atomen
- R⁶: ein geradkettiges oder verzweigtes Alkylen mit 1 bis 4 C-Atomen, worin eine Methylengruppe durch O ersetzt sein kann und mit COOM substituiert sein kann
und
- M: H, Na, K oder NH₄
bedeuten
oder eine entsprechende Monomereinheit mit hydrophober Gruppe der allgemeinen Formel (2),
worin
- R⁷: H,
- R⁸: H oder CH₃,
- Z: geradkettiges oder verzweigtes Alkyl mit 4 bis 18 C-Atomen,
Aryl, R⁶-Aryl oder R⁴-CONHX,
- X: geradkettiges oder verzweigtes Alkyl mit 6 bis 8 C-Atomen, Aryl, R⁶-Aryl,
und
- R⁶: ein geradkettiges oder verzweigtes Alkylen mit 1 bis 4 C-Atomen bedeuten
und
wobei das molare Verhältnis der Monomereinheiten mit negativer Ladung zu den Monomereinheiten mit hydrophober Gruppe in einem Bereich zwischen 99:1 bis 10:90 liegt.

Gegenstand der vorliegenden Erfindung ist auch ein Trennmaterial für die lonenaustauschchromatographie auf der Grundlage von organischen, hydroxylgruppenhaltigen Polymerbasisträgern, an deren Oberfläche Mischpolymere kovalent gebunden sind, die dadurch charakterisiert sind dass
a) der Basisträger aliphatische Hydroxylgruppen enthält,
b) die kovalent Mischpolymeren über eine endständige Monomereinheit an den Träger gebunden sind,
c) die Mischpolymere mindestens zwei verschiedene Monomereinheiten enthalten,
d) die Monomereinheiten linear miteinander verknüpft sind,
e) das Mischpolymer mindestens eine Monomereinheit enthält, die eine negative Ladung in Form einer Sulfonsäure oder Carbonsäure aufweist und zusätzlich Ester- oder Amidgruppen und Alkyl- und/oder Alkylengruppen mit insgesamt maximal 8 C-Atomen, aber keine Arylgruppen enthält,
   wobei das Mischpolymer mindestens eine Monomereinheit mit negativer Ladung umfasst, entweder der allgemeinen Formel (1) 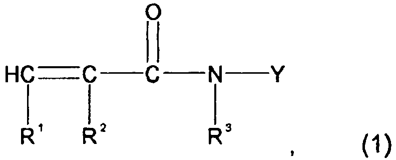 worin
   - R¹, R² und Y: unabhängig voneinander H oder CH₃,
   - R³: R⁴-SO₃M oder R⁴-COOM,
   - R⁴: geradkettiges oder verzweigtes Alkylen mit 2 bis 4-C-Atomen
   und
   - M: H, Na, K oder NH₄
   bedeuten oder der allgemeinen Formel (2) 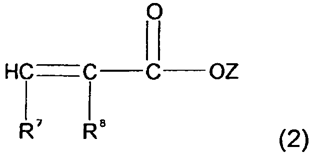 worin
   - R⁷ und R⁸: unabhängig voneinander H oder CH₃, oder
   - R⁷: COOM, wenn Z = M und R⁸ =H,
   - Z: entweder M oder R⁴-COOM mit
   - R⁴: geradkettiges oder verzweigtes Alkylen mit 2 bis 4 C-Atomen,
   und
   - M: H, Na, K oder NH₄
   bedeuten,
   oder mindestens jeweils eine Monomereinheit der allgemeinen Formel (1) und der allgemeinen Formel (2) aufweist
   und
f) das Mischpolymer mindestens eine Monomereinheit der allgemeinen Formel (1) enthält, die eine hydrophobe Gruppe aufweist, welche dem Mischpolymer einen hydrophoben Charakter verleiht 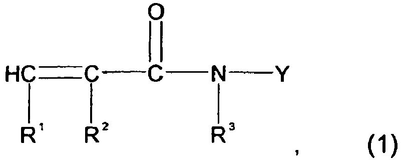 worin
   - R¹: H oder COOM,
   - R²: H oder CH₃,
   Y und R³ geradkettiges oder verzweigtes Alkyl mit bis zu 18 C-Atomen und wobei Y und R³ zusammen mindestens 6 C-Atome tragen,
   oder
   - Y: H
   - und R³: geradkettiges oder verzweigtes Alkyl mit 6 bis 18 C-Atomen,
   oder
   - Y: H
   und
   - R³: Aryl oder R⁶-Aryl,
   oder
   - Y: H oder CH₃
   und
   - R³: R⁴-CONHX,
   - X: geradkettiges oder verzweigtes Alkyl mit 6 bis 18 C-Atomen, Aryl oder R⁶-Aryl
   - R⁴: geradkettiges oder verzweigtes Alkylen mit 2 bis 4 C-Atomen, .
   - R⁶: geradkettiges oder verzweigtes Alkylen mit 1 bis 4 C-Atomen, worin eine Methylengruppe durch O ersetzt sein kann und mit COOM substituiert sein kann
   und
   - M: H, Na, K oder NH₄
   bedeuten
   und
g) das Verhältnis der Monomereinheiten mit negativer Ladung zu den Monomereinheiten mit hydrophober Gruppe in einem Bereich von 99 : 1 bis 10 : 90 liegt.

Solch ein kovalent gebundenes Pfropfpolymer kann ebenfalls hergestellt sein unter Verwendung von mindestens einer wasserlöslichen Monomereinheit der allgemeinen Formel (1) 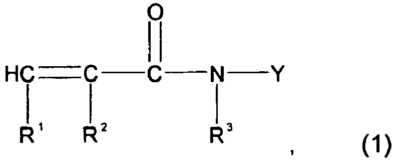 oder der allgemeinen Formel (2) 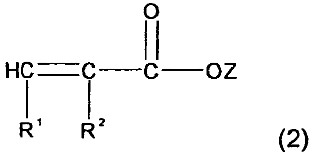 worin
- Y: R⁵-COOM
- R¹ und R²: unabhängig voneinander
H, geradkettiges oder verzweigtes Alkyl mit 1 bis 6 C-Atomen, Carboxy, Carboxymethyl
- R³: H, geradkettiges oder verzweigtes Alkyl mit 1 bis 6 C-Atomen, Y
- R⁵: geradkettiges oder verzweigtes Alkylen mit bis zu 8 C-Atomen, gegebenenfalls ein- oder mehrfach durch Alkoxy- oder Carboxygruppen substituiert
oder/und
Arylen mit bis zu 10 C-Atomen, gegebenenfalls ein- oder mehrfach durch Alkyl, Alkoxy- oder Carboxygruppen substituiert
bedeuten und
- M: H, Na, K oder NH₄ und
- Z: M oder Y.

Darüber hinaus sind solche Trennmaterialien auch herstellbar unter Verwendung von mindestens einer wasserlöslichen Monomereinheit der allgemeinen Formeln (1) oder (2), worin
- Y: R⁴-SO₃M
und
- R¹ und R²: unabhängig voneinander
H, geradkettiges oder verzweigtes Alkyl mit 1 bis 6 C-Atomen und
- R³: H, geradkettiges oder verzweigtes Alkyl mit 1 bis 6 C-Atomen und
- R⁴: Methylen, Ethylen, Propylen, Hexylen, Isopropylen, Isobutylen oder Phenylen bedeuten.

Der Rest Y der eingesetzten wasserlöslichen Monomereinheit der allgemeinen Formel (1) oder Formel (2) kann auch folgende Bedeutung annehmen:
- Y: R⁵-COOM,
wobei gleichzeitig
- R¹ und R²: unabhängig voneinander H, geradkettiges oder verzweigtes Alkyl mit 1 bis 6 C-Atomen und
- R³: H, geradkettiges oder verzweigtes Alkyl mit 1 bis 6 C-Atomen und
- R⁴: Methylen, Ethylen, Hexylen, Propylen Isopropylen, Isobutylen oder Phenylen bedeuten.

Besonders bevorzugt sind solche Trennmaterialien, welche Mischpolymere aufweisen, die mindestens zwei verschiedene Monomereinheiten enthalten und wobei die Mischpolymere jeweils mindestens eine Monomereinheit mit negativer Ladung ausgewählt aus der Gruppe 2-Acrylamido-2-methylpropan-sulfonsäure, 2-Acrylamidoethansulfonsäure, Carboxymethylacrylamid, Carboxyethylacrylamid, Carboxypropylacrylamid, Carboxymethylmethacrylamid, Carboxyethlymethacrylamid, Carboxypropylmethacrylamid, Maleinsäure, Acrylsäure und Methacrylsäure aufweisen und jeweils mindestens eine Monomereinheit mit hydrophober Gruppe der allgemeinen Formel (1) aufweisen, 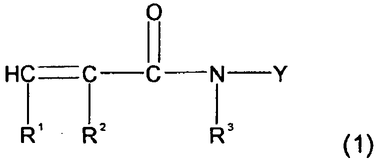 worin
- R¹: H,
- R²: H oder CH₃,
- Y: H
und
- R³: Aryl oder R⁶-Aryl,
oder
- Y: H oder CH₃
und
- R³: R⁴-CONHX mit
- X: Aryl oder R⁶-Aryl,
- R⁴: Methylen, Ethylen, Propylen und
- R⁶: ein geradkettiges oder verzweigtes Alkylen mit 1 bis 4 C-Atomen bedeutet, worin eine Methylengruppe durch -O-ersetzt sein kann und mit COOM substituiert sein kann
und
- M: H, Na, K oder NH₄
bedeuten.

Weiterhin sind solche Trennmaterialien bevorzugt, worin das Mischpolymer mindestens eine Monomereinheit mit negativer Ladung ausgewählt aus der Gruppe 2-Acrylamido-2-methylpropansulfonsäure, 2-Acrylamidoethan-sulfonsäure, Carboxymethylacrylamid, Carboxyethylacrylamid, Carboxypropylacrylamid, Carboxymethlymethacrylamid, Carboxyethlymethacrylamid, Carboxypropylmethacrylamid, Maleinsäure, Acrylsäure und Methacrylsäure aufweist und das Mischpolymer mindestens eine Monomereinheit mit hydrophober Gruppe der allgemeinen Formel (1) aufweist, 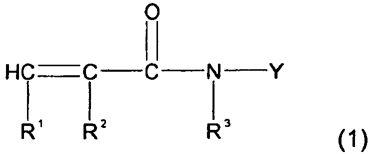 worin
- R¹: H,
- R²: H oder CH₃,
- Y: H
und
- R³: Phenyl, Benzyl, Phenylethyl oder Phenoxyethyl bedeuten,
oder
- Y: H oder CH₃
und
- R³: R⁴-CONHX mit

- X: Phenyl, Benzyl, oder Phenylethyl,
und
- R⁴: Methylen, Ethylen, Propylen, Acryloylphenylglycin oder Acryloylphenylalanin
bedeuten.

Besonders vorteilhafte Eigenschaften weisen entsprechende Trennmaterialien auf, die hergestellt sind unter Verwendung mindestens einer Verbindung ausgewählt aus der Gruppe der Methacrylamide, der Acrylamide oder der ungesättigten Carbonsäuren.

Gegenstand der vorliegenden Erfindung sind insbesondere Trennmaterialien, wie vorher beschrieben, zu deren Herstellung mindestens eine Verbindung ausgewählt aus der Gruppe der Sulfoalkylacrylate, wie 3-Sulfopropylacrylat oder 2-Sulfoethylacrylat, Vinylsulfonsäure, Styrolsulfonsäure, Allylsulfonsäure und, Vinyltoluolsulfonsäure oder aus der Gruppe der Sulfoalkylmethacrylate, wie 2-Sulfoethylmethacrylat oder 3-Sulfopropylmethacrylat eingesetzt wird.

Erfindungsgemäß kann aber auch zur Herstellung von geeigneten, derivatisierten Trennmaterialien mindestens eine Verbindung, ausgewählt aus der Gruppe Maleinsäure, Zimtsäure, Itaconsäure, Citraconsäure, Mesaconsäure, oder Fumarsäure oder der Gruppe der Carboxyalkylacrylate, wie Carboxyethylacrylat oder der Carboxyalkylmethacrylate eingesetzt werden.

Für den erfindungsgemäßen Zweck gut geeignete Trennmaterialien können darüber hinaus hergestellt werden unter Verwendung von mindestens einer Verbindung, ausgewählt aus der Gruppe Carboxymethylacrylamid, Carboxyethylacrylamid, Acryloyl-gammaaminobuttersäure und Acyloylphenylalanin, Acrylsäure, Methacrylsäure und Ethacrylsäure.

Insbesondere bevorzugt sind Trennmaterialien, welche ein kovalent gebundenes Pfropfpolymer an der Oberfläche aufweisen, hergestellt unter Verwendung mindestens einer Monomereinheit, welche einen ausgeprägten hydrophoben Anteil in Form mindestens einer Alkyl- oder Arylgruppe mit geeigneter Zahl an Kohlenstoffatomen aufweist. Erfindungsgemäß haben sich solche Trennmaterialien aufgrund der Möglichkeit, sowohl mit dem hydrophoben Anteil als auch mit dem geladenen Anteil des Pfropfpolymers mit dem abzutrennenden Biopolymer in Wechselwirkung zu treten, als besonders wirksam erwiesen.

Folglich ist eine Derivatisierung unter Verwendung mindestens einer Monomereinheit mit hydrophobem Anteil, ausgewählt aus der Gruppe der Alkylvinylketone, Arylvinylketone, Arylalkylvinylketone, Styrol, Alkylacrylate, Arylacrylate, Arylalkylacrylate, Alkylarylacrylate, Alkylmethacrylate, Arylmethacrylate, Arylalkylmethacrylate und Alkylarylmethacrylate besonders erstrebenswert.

Auch lassen sich besonders wirksame Trennmaterialien herstellen unter Verwendung mindestens einer Monomereinheit der allgemeinen Formel (1) mit hydrophobem Anteil,
worin Y = R⁶ bedeutet und worin
- R¹ und R²: unabhängig voneinander
H, unverzweigtes oder verzweigtes Alkyl mit bis zu 6 C-Atomen
- R³ und/oder R⁶: unabhängig voneinander
H, unverzweigtes oder verzweigtes Alkyl, Aryl, Afkylaryl, Arylalkyl bedeuten, wobei die Alkylgruppe Oxogruppen tragen kann, wobei die Alkyl- und/oder Arylgruppe ein- oder mehrfach durch Alkoxy, Phenoxy, Cyano, Carboxy, Acetoxy- oder Acetamino-Gruppen substituiert sein können,
und wobei R³ und R⁶ zusammen mindestens 6 C-Atome tragen,
bedeuten.

Trennmaterialien gemäß der vorliegenden Erfindung können daher hergestellt werden unter Verwendung mindestens einer Monomereinheit der allgemeinen Formel (1) mit hydrophobem Anteil, worin
- R³, R⁶: unabhängig voneinander H, Methyl, Ethyl, Propyl, Butyl, Pentyl, Hexyl, Heptyl, Octyl, Nonyl, Decyl, 2-, 3-, oder 4- Oxapentyl, 2-, 3-, 4- oder 5- Oxahexyl, 2-, 3-, 4-, 5- oder 6- Oxaheptyl, 3-Butoxypropyl, Isopropyl, 3-Butyl, Isobutyl, 2-Methylbutyl, Isopentyl, 2-Methylpentyl, 3-Methylpentyl, 2-Oxa-3-methylbutyl, 2-Methyl-3-oxahexyl, 2-Phenyl-2-oxoethyl, Phenoxyethyl, Phenyl, Benzyl, Phenylethyl und Phenylpropyl
und wobei R³ und R⁶ zusammen mindestens 6 C-Atome tragen,
bedeuten.

Erfindungsgemäße Trennmaterialien werden demzufolge bevorzugt hergestellt unter Verwendung mindestens einer dieser Monomereinheiten mit einer funktionellen Gruppe mit negativer Ladung und mindestens einer Monomereinheit, welche eine hydrophobe Gruppe aufweist, die dem Mischpolymer neben der negativen Ladung einen hydrophoben Charakter verleiht, sowie gegebenenfalls mindestens einer neutralen Monomereinheit, die hydrophil sein kann.

Besonders bevorzugt sind solche Trennmaterialien, welche hergestellt sind unter Verwendung mindestens einer neutralen Monomereinheit, der allgemeinen Formel (1), die hydrophil sein kann,
mit Y = R⁶ und worin
- R¹ , R²,: unabhängig voneinander H oder Methyl
- R³, R⁶: unabhängig voneinander
H, Alkyl, Alkoxyalkyl jeweils mit bis zu 4 C-Atomen bedeuten.

Ganz besonders bevorzugt sind Trennmaterialien mit mindestens einer neutralen Monomereinheit, die hydrophil sein kann, der allgemeinen Formel (1) mit Y = R⁶, worin
- R¹, R²,: unabhängig voneinander H oder Methyl
- R³, R⁶: unabhängig voneinander
H, Methyl, Ethyl, Butyl, Isopropyl, 3-Butyl, Isobutyl, Methoxyethyl oder Ethoxyethyl bedeuten.

Zur Herstellung des Trennmaterials kann daher mindestens eine neutrale Monomereinheit, ausgewählt aus der Gruppe Acrylamid (AAm), Dimethylacrylamid, Methacrylamid, Isopropylacrylamid, Methoxyethylacrylamid und Ethoxyethylacrylamid oder aus der Gruppe Methylacrylat und Methylmethacrylat eingesetzt werden, sowie unter Verwendung von zwei oder drei Monomeren ausgewählt aus der Gruppe 2-Acrylamido-2-methylpropansulfonsäure, Acrylsäure, N-Arylalkylacrylamide, wie Benzylacrylamid und Acryloylphenylalanin, N-Carboxyalkylacryl-amide, wie Acryloyl-gamma-aminobutter-säure, und N-Alkylacrylamide.

Gegenstand der vorliegenden Erfindung sind insbesondere Trennmaterialien, wie vorher beschrieben, worin das molare Verhältnis der Einheiten, die negative Ladungen tragen, zu den Einheiten mit aromatischen Gruppen in einem Bereich zwischen 99:1 bis 10:90, bevorzugt in einem Bereich zwischen 96:4 bis 40:60, liegt.

Hier wiederum weisen Trennmaterialien besonders gute Eigenschaften auf, deren Mischpolymer als Monomereinheit(en) mit negativer Ladung 2-Acrylamido-2-methylpropansulfonsäure oder/und 2-Acrylamidoethansulfonsäure enthält, und worin das molare Verhältnis der Monomereinheiten mit negativer Ladung zu den Monomereinheiten mit hydrophober Phenyl-, Benzyl- oder Phenylethyl-Gruppe in einem Bereich zwischen 70 : 30 bis 30 : 70 liegt.

Weitere Trennmaterialien mit besonders guten Eigenschaften sind solche, worin das Mischpolymer als Monomereinheit mit negativer Ladung Acrylsäure oder/und Methacrylsäure enthält, und worin das molare Verhältnis der Monomereinheiten mit negativer Ladung zu den Monomereinheiten mit hydrophober Phenyl-, Benzyl- oder Phenylethyl- Gruppe in einem Bereich zwischen 95 : 5 bis 70 : 30 liegt.

Außerdem haben sich solche Trennmaterialien in der Anwendung als sehr gut erwiesen, worin das Mischpolymer als Monomereinheit mit negativer Ladung ein Monomer aus der Reihe 2-Acrylamido-2-methylpropansulfonsäure und 2-Acrylamidoethansulfonsäure aufweist und ein Monomer aus der Reihe Acrylsäure und Methacrylsäure enthält und das molare Verhältnis der Monomereinheiten mit negativer Ladung zu den Monomereinheiten mit hydrophober Phenyl-, Benzyl- oder Phenylethyl-Gruppe in einem Bereich zwischen 95:5 bis 30:70 liegt.

Die Lösung der vorliegenden Aufgabe erfolgt insbesondere durch Trennmaterialien, worin der Anteil der geladenen Gruppen der kovalent an die Oberfläche gebundenen Poly(acrylamid)-Pfropfpolymere, welche als geladene Gruppen nur Sulfonsäuregruppen aufweisen, im Bereich von 35 bis 70 mol-% im Verhältnis zur Gesamtmenge des Pfropfpolymers beträgt. Eine weitere Lösung der erfindungsgemäßen Aufgabe kann durch entsprechende Trennmaterialien erfolgen, worin der Anteil der geladenen Gruppen der Pfropfpolymere, welche als geladene Gruppen nur Carbonsäuregruppen aufweisen, im Bereich von 60 bis 98 mol-% im Verhältnis zur Gesamtmenge des Pfropfpolymers beträgt.

Die erfindungsgemäßen Trennmaterialien sind besonders gut zurr Verwendung in Chromatographiesäulen geeignet. Somit sind auch Chromatographiesäulen, welche die beschriebenen erfindungsgemäßen Trennmaterialien aufweisen, Gegenstand der vorliegenden Erfindung.

Insbesondere sind die hier charakterisierten Trennmaterialien besonders gut geeignet, zur Abtrennung von Biopolymeren aus flüssigen Medien.
Es hat als besonders vorteilhaft erwiesen, dass sich mittels dieser Trennmaterialen Biopolymere aus einer Flüssigkeit mit einer elektrolytischen Leitfähigkeit, die höher ist als 6 mS/cm bevorzugt höher als 9 mS/cm, einfach und effektiv adsorbieren lassen, während entsprechende Biopolymere in einer wässrigen Flüssigkeit, die eine elektrolytische Leitfähigkeit im Bereich von 1 bis 20mS/cm und einen pH Wert größer 4 besitzt, gelöst vorliegt, bzw. desorbiert werden kann. Somit sind diese Trennmaterialien geeignet, Antikörper aus einer wässrigen Flüssigkeit mit einem pH von 5,5 und mit einer elektrolytischen Leitfähigkeit, die höher ist als 6 mS/cm, bevorzugt höher als 9 mS/cm, zu adsorbieren und können so in einfacher Weise zur Abtrennung aus biologischen Flüssigkeiten verwendet werden. Anschließend kann das belegte Trennmaterial behandelt werden und das Biopolymere mit einer geeigneten Flüssigkeit eluiert werden.

Gegenstand der vorliegenden Erfindung ist somit auch die Verwendung des charakterisierten Trennmaterials zur Abtrennung eines Biopolymers aus einer Flüssigkeit, indem das durch Wechselwirkung mit den ionischen und den hydrophoben Gruppen an das Trennmaterial gebundene Biopolymer, entweder durch Erhöhen der lonenstärke und/oder durch Änderung des pHs in der Lösung und/oder durch Einsatz eines Eluenten mit anderer Polarität als der des Adsorptionspuffers desorbiert wird.

Ein geeignetes Verfahren zur Herstellung solcher erfindungsgemäßen Trennmaterialien erfolgt, indem mindestens eine Monomereinheit mit einer funktionellen Gruppe mit negativer Ladung mit mindestens einer Monomereinheit mit einer hydrophoben Gruppe, und gegebenenfalls mit einem neutralen Monomer mit hydrophilen Eigenschaften, in einer ein- oder zweistufigen Reaktion auf einem hydroxylgruppenhaltigen, organischen Polymerträgermaterial pfropfpolymerisiert wird. Zu diesem Zweck wird beispielsweise mindestens eine Monomereinheit mit einer funktionellen Gruppe mit negativer Ladung mit mindestens einer Monomereinheit mit einer hydrophoben Gruppe, und gegebenenfalls ein neutrales Monomer mit hydrophilen Eigenschaften, in verdünnter Säure unter Zusatz eines Cosolvenz in Gegenwart von Cer(IV)-ionen in Lösung gebracht und auf einem hydroxylgruppenhaltigen, organischen Polymerträgermaterial pfropfpolymerisiert.

Das erfindungsgemäße Verfahren zur Herstellung der oben charakterisierten Trennmaterielien ist insbesondere dadurch gekennzeichnet, dass
a) mindestens ein Monomer mit Carboxygruppe der allgemeinen Formel (1), 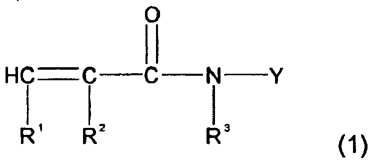 worin
   - R¹, R² und Y: unabhängig voneinander
   H oder CH₃,
   - R³: R⁴-COOM und
   - R⁴: geradkettiges oder verzweigtes Alkylen mit 2 bis 4 C-Atomen und
   - M: H, Na, K oder NH₄ bedeuten,
   und/oder ein Monomer mit Carboxygruppe der allgemeinen Formel (2), 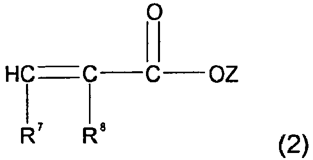 worin
   - R⁷ und R⁸: unabhängig voneinander
   H oder CH₃, oder
   - R⁷: COOM, wenn Z = M und R⁸ =H,
   - Z: entweder M oder R⁴-COOM mit
   - R⁴: geradkettiges oder verzweigtes Alkylen mit 2 bis 4 C-Atomen,
   und
   - M: H, Na, K oder NH₄
   bedeuten, gegebenenfalls mit einem wasserlöslichen Monomer zusammen auf einen hydroxylgruppenhaltigen, organischen Polymerträgermaterial pfropfpolymerisiert wird, und
b) anschließend ein Teil der pfropfpolymerisierten Carboxygruppen durch Kupplung mit einem Amin zu Amidgruppen umgesetzt wird.

Eine ausgewählte Variante dieses Verfahrens besteht darin, dass
a) mindestens ein Monomer mit Carboxygruppe der allgemeinen Formel (1), 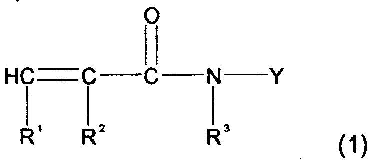 worin
   - R¹, R² und Y: unabhängig voneinander H oder CH₃,
   - R³: R⁴-COOM,
   - R⁴: geradkettiges oder verzweigtes Alkylen mit 2 bis 4 C-Atomen und
   - M: H, Na, K oder NH₄
   bedeuten,
   und/oder der allgemeinen Formel (2), 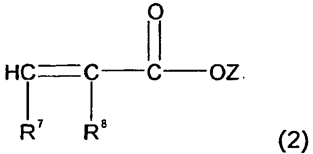 worin
   R⁷ und R⁸ unabhängig voneinander H oder CH₃,
      oder
   R⁷ COOM, wenn Z = M und R⁸ = H
   Z M oder R⁴-COOM
   R⁴ geradkettiges oder verzweigtes Alkylen mit 2 bis 4 C-Atomen,
      und
   M H, Na, K oder NH₄
   bedeuten,
   gegebenenfalls mit einem weiteren wasserlöslichen Monomer zusammen, in Wasser gelöst wird, so dass der Anteil der negativ geladenen Gruppen 1 bis 100 mol% im Verhältnis zur Gesamtmonomermenge beträgt,
b) die erhaltene Lösung mit dem Trägermaterial derart vermischt wird, dass 0,05 bis 100 mol Gesamtmonomer je Liter sedimentiertes Trägermaterial eingesetzt werden,
c) zu der erhaltenen Suspension in Mineralsäure gelöstes Cer(IV)-salz hinzugefügt wird, wodurch sich ein pH-Wert im Bereich von 0 - 5 einstellt,und eine Cer(IV)-Konzentration von 0,00001 - 0,5 mol/L, bevorzugt 0,001 - 0,1 mol/L, und
d) das Reaktionsgemisch innerhalb von einer Zeit von 0,5 bis 72 Stunden pfropfpolymerisiert wird und
e) zur Modifizierung der pfropfpolymerisierten Carboxygruppen durch Kupplung ein Amin oder eine Amingemisch eingesetzt wird,und
f) dass die Gesamtaminmenge in einem molaren Verhältnis von 0,01 bis 100:1 zu den auf dem Träger gebundenen Carboxygruppen eingesetzt wird und in Gegenwart eines Kupplungsreagenzes, welches in einem molaren Verhältnis von 0,01 :1 bis 20 :1 zu den auf dem Träger gebundenen geladenen Gruppen eingesetzt wird, zu Amidgruppen umgesetzt wird, und
g) für die Kupplung ein Alkyl-, Aryl- oder Arylalkylamin mit 6 bis 18 C-Atomen aus der Gruppe Anilin, Benzylamin, 4-Fluorbenzylamin, 4-Methoxybenzylamin, Napthylmethylamin, Phenacylamin, Phenylethylamin, Phenoxyethylamin, Tryptamin oder Tyramin als freies Amin oder als Hydrochlorid eingesetzt wird.

Zur Durchführung des erfindungsgemäßen Verfahrens wird als verdünnte Säure eine Säure aus der Gruppe Schwefelsäure, Salzsäure und Salpetersäure eingesetzt, und zwar in einer Konzentration im Bereich von 1 bis 0,00001 mol/l, wobei die Säure im Volumenverhältnis von 30 : 70 bis 98 : 2 mit einem Cosolvens gemischt wird. Als Cosolvens kann mindestens ein Lösungsmittel, ausgewählt aus der Gruppe Dioxan, Aceton, Dimethylformamid, Dimethylacetamid und Tetrahydrofuran eingesetzt werden.

Um derivatisierte Trennmaterialien mit den gewünschten Eigenschaften zu erhalten werden zur Durchführung des Verfahrens geladene Monomere und hydrophobe Monomere in einem solchen Verhältnis zueinander eingesetzt werden, dass der Anteil der hydrophoben Komponente 1 - 90 mol-% im Verhältnis zur Gesamtmonomermenge beträgt, wobei 0,05 - 100 mol Monomere je Liter sedimentiertes Trägermaterial eingesetzt werden.

Eine ausgewählte Durchführungsform des erfindungsgemäßen Verfahrens besteht darin, dass funktionalisierte (Meth-)Acrylamide und (Meth-)-Acrylsäure in einer einstufigen Reaktion an die Oberfläche eines hydroxylgruppenhaltigen, organischen Polymerträgermaterial pfropfpolymerisiert werden.

Eine andere Variante des erfindungsgemäßen Verfahrens besteht darin, dass ein hydrophiles Monomer in einem flüssigen Reaktionsmedium auf einem hydroxylgruppenhaltigen, organischen Polymerträgermaterial pfropfpolymerisiert wird und das erhaltene Pfropfpolymer in einem zweiten Schritt durch eine polymeranaloge Reaktion hydrophob modifiziert wird.

Vorzugsweise erfolgt die Durchführung des erfindungsgemäßen Verfahrens zur Herstellung der Trennmaterialien indem
a) ein hydrophiles Monomer in Wasser gelöst wird, welches gegebenenfalls mit weiteren Monomeren in einem Verhältnis gemischt wird, so dass der Anteil negativ geladener Gruppen 1 bis 100 mol-% im Verhältnis zur Gesamtmonomermenge beträgt,
b) die erhaltene Lösung mit dem Trägermaterial derart vermischt wird, dass 0,05 bis 100 mol Gesamtmonomer je Liter sedimentiertes Polymermaterial eingesetzt werden,
c) zu der erhaltenen Suspension in Mineralsäure gelöstes Cer(IV)-salz hinzugefügt wird, wodurch sich ein pH-Wert im Bereich von 0 - 5 einstellt, und
d) das Reaktionsgemisch innerhalb von einer Zeit von 0,5 bis 72 Stunden pfropfpolymerisiert wird.

Vorzugsweise wird hierbei der zur hydrophoben Modifizierung verwendete Monomerbaustein in einem Überschuss von 100 bis 10000 mol-% im Verhältnis zu den auf dem Träger gebundenen geladenen Gruppen in Gegenwart eines Kupplungsreagenzes eingesetzt, wobei letzteres in einem Überschuss von 60 bis 2000 mol-% im Verhältnis zu den auf dem Träger gebundenen geladenen Gruppen eingesetzt wird.

Gegenstand der vorliegenden Erfindung ist damit auch das so erhaltene Trennmaterial, welches in Form einer Chromatographiesäule vorliegen kann, und welches erfindungsgemäß durch Pfropfpolymerisation derivatisiert worden ist.

Die vorliegende Erfindung umfasst ebenfalls die Verwendung der erfindungsgemäßen Trennmaterialien zur Abtrennung von Biopolymeren aus flüssigen Medien, insbesondere zur Abtrennung von Protein aus flüssigen Medien oder zur Abtrennung von Antikörper aus flüssigen Medien. Besonders selektiv gestaltet sich die Abtrennung, wenn das Biopolymer mit den ionischen und mit den hydrophoben Gruppen des an der Oberfläche des Trägermaterials kovalent gebundenen Pfropfpolymers in Wechselwirkung tritt. Hierbei wird das Biopolymer adsorbiert, indem es sowohl mit dem geladenen Anteil des Pfropfpolymers als auch mit dem hydrophoben Anteil in Wechselwirkung tritt. Die anschließende Freisetzung des adsorbierten und aus der Flüssigkeit abgetrennten Biopolymers kann erfolgen, indem das durch Wechselwirkung mit den ionischen und gegebenenfalls hydrophoben Gruppen an das Trennmaterial gebundene Biopolymer entweder durch
a) Erhöhen der lonenstärke und/oder
b) durch Änderung des pHs
   in der Lösung
   und/oder
c) durch einen geeigneten Eluenten mit anderer Polarität als der des Adsorptionspuffers wieder desorbiert wird.

Die nachfolgend beschriebene Erfindung bezieht sich dementsprechend auf die Herstellung von Mischpfropfpolymeren auf hydroxylgruppenhaltigen Oberflächen von porösen Partikeln oder von entsprechenden, geeigneten Formkörpern, die dadurch gekennzeichnet sind, dass die Pfropfpolymere aus zwei oder mehreren wiederkehrenden Einheiten aufgebaut sind, wobei mindestens eine der Einheiten eine negative Ladung trägt und mindestens eine Einheit mit einer hydrophoben Gruppe verknüpft ist, und dass die Pfropfpolymere durch ionische Wechselwirkung geladene Substanzen binden können, insbesondere geladene Substanzen, welche in Zellkulturen und Zellkulturüberständen zu finden sind.

Die Verwendung von flexiblen an die Trägeroberfläche gebundenen Pfropfpolymeren, sogenannte "Tentakeln", als ionenaustauschende Gruppen ist bekannt. So ist in dem kommerziell erhältlichen Kationenaustauscher Fractogel^{®} EMD SO₃⁻ (M) das Pfropfpolymer nur aus einer wiederkehrenden Einheit mit Sulfonsäuregruppen aufgebaut. Der Kationenaustauscher Fractogel^{®} EMD COO⁻ (M) ebenfalls besteht nur aus wiederkehrenden hydrophilen Einheiten. Diese Kationenaustauscher zeigen nur eine geringe Bindungskapazität beispielsweise gegenüber Immunglobulin (lgG), wenn sich das IgG in einer Lösung mit einem Leitwert größer als 10 mS/cm befindet, also z.B. in einer Lösung, die 150 mM Natriumchlorid enthält.

In den Patenten EP 0 337 144 oder US 5,453,186 sind keine Informationen zu Monomerkombinationen aufgeführt, die bei der Synthese eines salztoleranten Ionenaustauschers zu bevorzugen sind. Erst durch eigene Versuche zur Herstellung von verschiedenen Pfropfpolymeren zeigte sich, dass die Kombination von hydrophoben und negativ geladenen Monomeren für die geplante Verwendung besonders geeignet ist. Für Versuchsreihen zur Pfropfung wurden bevorzugt funktionalisierte Acrylamide und Acrylsäure wie sie z.B. in Tabelle 1 aufgelistet sind verwendet, da die daraus gebildeten Polymere unter alkalischen Bedingungen hydrolysestabil sind. Für die Untersuchungen wurden die Materialien einer mehrstündigen Behandlung mit 0,1 M bis 1,0 M Natronlauge unterzogen. Weitergehende Untersuchungen der Eigenschaften in wässrigen Lösungen zeigten, dass die erhaltenen, neuen Oberflächenstrukturen trotz ihrer hydrophoben Eigenschaften sehr gute Quelleigenschaften besitzen. Dieses ist offensichtlich darauf zurückzuführen, dass die erhaltenen Poly(acrylamide), wie aus der Literatur bekannt (W. Shi et al., J. Chromatography A, 2001, 924, 123-135), in wässrigen Lösungen Wasserstoffbrückenbindungen ausbilden können.

Zur Herstellung der erfindungsgemäßen Trennmaterialien kann ein hydrophiler Chromatographieträger, wie z. B. Fractogel TSK HW65 (S) oder (M), welches identisch ist mit dem kommerziell erhältlichen Toyopearl HW-65 (S) und (M), verwendet werden. Dieser Träger wird mit Mischpfropfpolymeren modifiziert. Die an den Chromatographieträger gebundenen Mischpfropfpolymere sind auf zwei verschiedenen Herstellungswegen zugänglich:
a) Der Einbau aller funktionellen Gruppen an der Oberfläche des Chromatographieträgers erfolgt bei der einstufigen Pfropfpolymerisation durch einen einzigen Pfropfpolymerisationsschritt
   oder
b) in einem zweistufigen Verfahren erfolgt zuerst eine Pfropfung durch geeignete hydrophile Bausteine gefolgt vom Einbau der hydrophoben Gruppen durch polymeranaloge Reaktion am Pfropfpolymer.

Für die Herstellung der erfindungsgemäßen Materialien können auch andere Chromatographieträger, bei denen es sich um organische Polymere handelt, verwendet werden. Voraussetzung hierfür ist jedoch, dass das verwendete Material für die Pfropfpolymerisationsreaktion zugängliche reaktive Gruppen, insbesondere OH-Gruppen aufweist. Solche organischen Polymere können Polysaccharide, wie Agarose, Dextrane, Stärke, Zellulose, usw., oder synthetische Polymere, wie Poly(acrylamide), Poly(methacrylamide), Poly(acrylate), Poly(methacrylate), hydrophil substituierte Poly(alkylallylether), hydrophil substituierte Poly(alkylvinylether), Poly(vinylalkohole), Poly(styrrole) und Copolymere der korrespondierenden Monomere, sein. Diese organischen Polymere können bevorzugt auch in Form eines quervernetzten hydrophilen Netzwerks eingesetzt werden. Hierzu zählen auch Polymere aus Styrrol und Divinylbenzol, die bevorzugt, wie andere hydrophobe Polymere auch, in einer hydrophilisierten Form eingesetzt werden können.

Bevorzugt werden hydrophile Trägermaterialien eingesetzt, die stabil gegenüber Hydrolyse sind oder sich nur schwer hydrolysieren lassen, weil die erfindungsgemäßen Materialien einer alkalischen Reinigung bzw. Regeneration bei pH ≥ 13 über eine längere Anwendungsdauer standhalten müssen. Die Träger können bereits niedermolekulare Liganden tragen. Liganden können ein oder mehrere geladene Gruppen, hydrophobe Gruppen oder Gruppen, die Wasserstoffbrückenbindungen bilden können, tragen. Bevorzugt sind Liganden mit negativ geladenen Gruppen.

Die Trägermaterialien können auch aus unregelmäßig geformten oder aus sphärischen Partikeln bestehen, deren Partikelgröße zwischen 2 und 1000 µm liegen kann. Bevorzugt sind Partikelgrößen zwischen 3 und 300 µm.

Die Trägermaterialien können insbesondere als unporöse oder bevorzugt als poröse Partikel vorliegen. Die Porengrößen können zwischen 2 und 300 nm liegen. Bevorzugt sind Porengrößen zwischen 5 und 200 nm.

Genauso können die Trägermaterialien auch in Form von Membranen, Fasern, Hohlfasern, Beschichtungen oder als monolithische Formkörper vorliegen. Monolithische Formkörper sind dreidimensionale Körper, z. B. in zylindrischer Form.

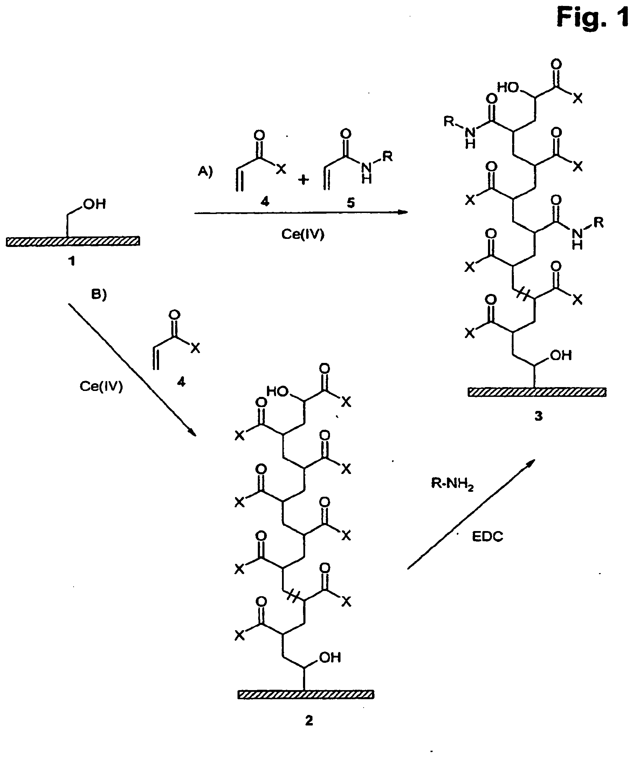

Abbildung 1 zeigt schematisch beide oben angesprochenen Herstellungsvarianten. Im Einzelnen zeigt diese Abbildung folgendes:
Das Monomer 4, das eine anionische Gruppe enthält, und das hydrophobe Monomer 5 können als Gemisch direkt auf die hydrophile Trägeroberfläche 1 gepfropft werden, und es entsteht die chemische modifizierte Oberfläche 3 mit anionischen und hydrophoben Gruppen. Wenn das Monomer 4 Carboxygruppen enthält, kann zuerst die hydrophile anionische Oberfläche 2 erzeugt werden, die anschließend durch hydrophobe Modifizierung mit z.B einem Arylalkylamin und einem Carbodiimid als Kupplungsreagnez in 3 überführt wird. Das Monomer 4 kann eine Mischung von hydrophilen, und das Monomer 5 eine Mischung von hydrophoben und neutralen Monomeren sein.

Zur einstufigen Pfropfpolymerisation wird mindestens ein negativ geladenes Monomer verwendet, welches beispielsweise Sulfonsäure- oder Carboxy-Gruppen aufweist. Geeignete Monomere mit Sulfonsäure-Gruppen sind beispielsweise Vinylsulfonsäure, Styrolsulfonsäure, Allylsulfonsäure, Vinyltoluolsulfonsäure, Acrylate der Formel 2 mit Z = R⁴-SO₃M, worin R⁷ und R⁸ unabhängig voneinander die Bedeutungen Wasserstoff oder Alkyl mit bis zu 6 C-Atomen, bevorzugt Wasserstoff oder Methyl, Carboxy oder Carboxymethyl haben können und worin R⁴ eine geradkettige Alkylengruppe mit 1 bis 8 C-Atomen, wie zum Beispiel Methylen, Ethylen, Propylen oder Hexylen, oder eine verzweigte Alkylengruppe mit 1 bis 8 C-Atomen sein kann, wie zum Beispiel Isopropylene oder Isobutylen. Die Alkylengruppe kann gegebenenfalls ein- oder mehrfach durch Alkoxy- oder Carboxygruppen substituiert sein. R⁴ kann ebenfalls die Bedeutung einer Arylengruppe mit bis zu 10 C-Atomen haben, wie zum Beispiel Phenylen. Die Alkylengruppe kann gegebenenfalls ein- oder mehrfach, vorzugsweise ein- oder zweifach, insbesondere einfach durch Alkylgruppen mit mit 1 bis 4 C-Atomen, Alkoxy- oder Carboxygruppen substituiert sein. R⁴ kann auch aus einer Kette aus einer Alkylen- und einer Arylengruppe oder einer Arylen- und einer Alkylengruppe bestehen. M ist eine Wasserstoffatom oder ein Metallkation, wie Natrium oder Kalium, oder ein Ammoniumkationen. M ist so gewählt, dass das Monomer wasserlöslich ist. Beispielhaft sind die Sulfoalkylacrylate, wie 3-Sulfopropylacrylat oder 2-Sulfoethylacrylat, und die Sulfoalkylmethacrylate, wie 3-Sulfopropylmethacrylat oder 2-Sulfoethylmethacrylat erwähnt. Bevorzugt werden die Acrylamide der Formel 1 mit R³ = R⁴-SO₃M eingesetzt, worin R¹, R² und Y unabhängig voneinander die Bedeutungen Wasserstoff oder Alkyl mit bis zu 6 C-Atomen haben, bevorzugt Wasserstoff oder Methyl, R¹ und R² können ebenfalls unabhängig voneinander Carboxy oder Carboxymethyl sein, R³ kann auch auch R⁴-SO₃M sein, und worin R⁴ eine geradkettige Alkylengruppe mit 1 bis 8 C-Atomen, wie zum Beispiel Methylen, Ethylen, Propylen oder Hexylen, oder eine verzweigte Alkylengruppe mit 1 bis 8 C-Atomen sein kann, wie zum Beispiel Isopropylene oder Isobutylen. Die Alkylengruppe kann gegebenenfalls ein- oder mehrfach durch Alkoxy- oder Carboxygruppen substituiert sein. R⁴ kann ebenfalls die Bedeutung einer Arylengruppe mit bis zu 10 C-Atomen haben, wie zum Beispiel Phenylen. Die Alkylengruppe kann gegebenenfalls ein- oder mehrfach, vorzugsweise ein- oder zweifach, insbesondere einfach durch Alkylgruppen mit mit 1 bis 4 C-Atomen, Alkoxy- oder Carboxygruppen substituiert sein. R⁴ kann auch aus einer Kette aus einer Alkylen- und einer Arylengruppe oder einer Arylen- und einer Alkylengruppe bestehen. M ist ein Wasserstoffatom oder ein Metallkation, wie Natrium oder Kalium, oder ein Ammoniumkationen. M ist so gewählt, dass das Monomer wasserlöslich ist. Als geeignete Acrylamide seien hier beispielhaft 2-Acrylamido-2-methylpropansulfonsäure (AMPS) und 2-Acrylamidoethansulfonsäure genannt.

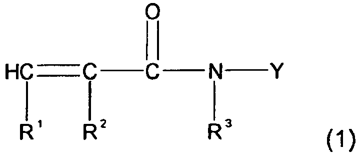

Geeignete Monomere mit Carboxy-Gruppe können beispielsweise Zimtsäure oder Acrylate der Formel 2 mit Z = R⁵-COOM sein, worin R¹ und R² unabhängig voneinander die Bedeutungen Wasserstoff oder Alkyl mit bis zu 6 C-Atomen, bevorzugt Wasserstoff oder Methyl, Carboxy oder Carboxymethyl haben können und worin R⁵ eine geradkettige Alkylengruppe mit 1 bis 8 C-Atomen, wie zum Beispiel Methylen, Ethylen, Propylen oder Hexylen, oder eine verzweigte Alkylengruppe mit 1 bis 8 C-Atomen sein kann, wie zum Beispiel Isopropylene oder Isobutylen. Die Alkylengruppe kann gegebenenfalls ein- oder mehrfach durch Alkoxy- oder Carboxygruppen substituiert sein. R⁵ kann ebenfalls die Bedeutung einer Arylengruppe mit bis zu 10 C-Atomen haben, wie zum Beispiel Phenylen. Die Alkylengruppe kann gegebenenfalls ein- oder mehrfach, vorzugsweise ein- oder zweifach, insbesondere einfach durch Alkylgruppen mit mit 1 bis 4 C-Atomen, Alkoxy- oder Carboxygruppen substituiert sein kann. R⁵ kann auch aus einer Kette aus einer Alkylen- und einer Arylengruppe oder einer Arylen- und einer Alkylengruppe bestehen. M ist ein Wasserstoffatom oder ein Metallkation, wie Natrium oder Kalium, oder ein Ammoniumkationen. M ist so gewählt, dass das Monomer wasserlöslich ist. Beispielhaft sind die Carboxyalkylacrylate, wie Carboxyethylacrylat und die Carboxyalkylmethacrylate erwähnt. Bevorzugt werden die Acrylamide der Formel 1 mit R³ = R⁵-COOM eingesetzt, worin R¹, R² und Y unabhängig voneinander die Bedeutungen Wasserstoff oder Alkyl mit bis zu 6 C-Atomen haben, bevorzugt Wasserstoff oder Methyl, R¹ und R² können unabhängig voneinander ebenfalls Carboxy oder Carboxymethyl sein, R³ kann auch auch R⁵-COOM sein, und worin R⁵ eine geradkettige Alkylengruppe mit 1 bis 8 C-Atomen, wie zum Beispiel Methylen, Ethylen, Propylen oder Hexylen, oder eine verzweigte Alkylengruppe mit 1 bis 8 C-Atomen sein kann, wie zum Beispiel Isopropylene oder Isobutylen. Die Alkylengruppe kann gegebenenfalls ein- oder mehrfach durch Alkoxy- oder Carboxygruppen substituiert sein. R⁵ kann ebenfalls die Bedeutung einer Arylengruppe mit bis zu 10 C-Atomen haben, wie zum Beispiel Phenylen. Die Alkylengruppe kann gegebenenfalls ein- oder mehrfach, vorzugsweise ein- oder zweifach, insbesondere einfach durch Alkylgruppen mit mit 1 bis 4 C-Atomen, Phenyl-, Phenylmethyl-, Alkoxy- oder Carboxygruppen substituiert sein. R⁵ kann auch aus einer Kette aus einer Alkylen- und einer Arylengruppe oder einer Arylen- und einer Alkylengruppe bestehen. M ist ein Wasserstoffatom oder ein Metallkation, wie Natrium oder Kalium, oder ein Ammoniumkationen. M ist so gewählt, dass das Monomer wasserlöslich ist. Als geeignete Acrylamide sei hier beispielhaft Acryloyl-gamma-aminobuttersäure genannt. Besonders bevorzugt werden ungesättigte Carbonsäuren der Formel 2 mit Z = M eingesetzt, worin R⁷ und R⁸ unabhängig voneinander die Bedeutungen Wasserstoff oder Alkyl mit bis zu 6 C-Atomen, bevorzugt Wasserstoff oder Methyl, Carboxy oder Carboxymethyl haben können. M ist ein Wasserstoffatom oder ein Metallkation, wie Natrium oder Kalium, oder ein Ammoniumkationen. M ist so gewählt, dass das Monomer wasserlöslich ist. Beispielhaft seien Maleinsäure, Itaconsäure, Citraconsäure, Mesaconsäure, oder Fumarsäure genannt. Davon werden insbesondere Monomere der Formel 2 mit Z = M bevorzugt, worin R⁷ Wasserstoff und R⁸ Wasserstoff oder Alkyl mit bis zu 3 C-Atomen bedeuten. Beispielhaft seien hierfür Acrylsäure (AS), Methacrylsäure oder Ethacrylsäure genannt.

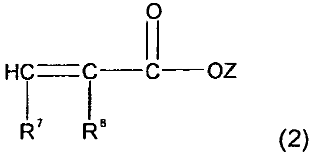

Als weitere Komponente für die einstufige Pfropfpolymerisation wird mindestens ein hydrophobes Monomer benötigt, welches im Molekül einen ausgeprägten hydrophoben Anteil besitzt. Geeignete hydrophobe Monomere besitzen daher wenigstens eine Alkyl- oder Arylgruppe oder eine andere Gruppe, durch die die hydrophoben Eigenschaften des Moleküls hervorgerufen werden. Bevorzugt sind Monomere, deren hydrophoben Eigenschaften durch Alkylgruppen mit geeigneter Zahl an Kohlenstoffatomen oder durch Arylgruppen hervorgerufen werden. als hydrophobe Monomere werden bevorzugt Monomere eingesetzt, welche Alkyl- oder Arylgruppen aufweisen. Für die erfindungsgemäße Verwendung geeignete hydrophobe Monomere sind beispielsweise Acrylate der Formel (2), worin R⁷ die Bedeutung Wasserstoff hat, R⁸ Wasserstoff oder Methyl und Z geradkettiges oder verzweigtes Alkyl mit 4 bis 18 C-Atomen, Aryl, R⁶-Aryl oder R⁴-CONHX, wobei X geradkettiges oder verzweigtes Alkyl mit 6 bis 8 C-Atomen, Aryl, R⁶-Aryl bedeutet ,und R⁶ ein geradkettiges oder verzweigtes Alkylen mit 1 bis 4 C-Atomen bedeuteten, beispielhaft seien Butylacrylat und Butylmethacrylat genannt.. Bevorzugt sind die Acrylamide der allgemeinen Formel 1, worin R¹ und R² unabhängig voneinander die Bedeutungen Wasserstoff oder Alkyl mit bis zu 6 C-Atomen, bevorzugt Wasserstoff oder Methyl, haben und worin Y und/oder R³ unabhängig voneinander die Bedeutung Alkyl, wobei Y und R³ zusammen mindestens 6 C-Atome tragen, bevorzugt 6 bis 18 C-Atome, und Methylengruppen durch O ersetzt sein können, Aryl, Alkylaryl, Arylalkyl haben, wobei Alkyl- und/oder Arylgruppe ein- oder mehrfach, vorzugsweise ein- oder zweifach, insbesondere einfach substituiert sein kann durch Alkoxy, Cyano, Carboxy, Acetoxy- oder Acetamino-Rest, und. Y und/oder R³ bedeuten demnach unabhängig voneinander bevorzugt Methyl, Ethyl, Propyl, Butyl, Pentyl, Hexyl, Heptyl, Octyl, Nonyl, Decyl, 2-, 3-, oder 4- Oxapentyl, 2-, 3-, 4- oder 5- Oxahexyl, 2-, 3-, 4-, 5- oder 6- Oxaheptyl, 3-Butoxypropyl, Isopropyl, 3-Butyl, Isobutyl, 2-Methylbutyl, Isopentyl, 2-Methylpentyl, 3-Methylpentyl, 2-Oxa-3-methylbutyl, 2-Methyl-3-oxahexyl. Vorzugsweise können Y und/oder R³ unabhängig voneinander auch die Bedeutung einer Phenylgruppe haben, die vorzugsweise einfach substituiert ist durch Cyano, Cyanoalkyl, Alkyl, Alkoxy, Alkoxyalkyl, und zwar bevorzugt in p-Stellung. Y und/oder R³ stehen unabhängig voneinander bevorzugt für eine Phenyloxyalkylgruppe wie Phenoxyethyl oder eine Phenylalkylgruppe, insbesondere stehen Y und/oder R³ unabhängig voneinander besonders bevozugt für Benzyl, Phenylethyl, Phenylpropyl. Alkylgruppen können Oxogruppen tragen. Als hydrophobe Monomere sind in diesem Fall besonders bevorzugt Acrylamide der Formel 1, worin R¹ und R² unabhängig voneinander die Bedeutungen Wasserstoff oder Alkyl mit bis zu 6 C-Atomen haben, bevorzugt Wasserstoff oder Methyl, worin Y die Bedeutung Wasserstoff hat und worin R³ die Bedeutungen Alkyl, wobei R³ mindestens 6 C-Atome trägt, bevorzugt 6 bis 18 C-Atome, und Methylengruppen durch O ersetzt sein können, Aryl, Alkylaryl, Arylalkyl hat, wobei Alkyl- und/oder Arylgruppe ein- oder mehrfach, vorzugsweise ein- oder zweifach, insbesondere einfach substituiert sein kann durch Alkoxy, Cyano, Carboxy, Acetoxy- oder Acetamino-Rest. R³ bedeutet demnach bevorzugt Hexyl, Heptyl, Octyl, Nonyl, Decyl, 2-, 3-, 4-, 5- oder 6-Oxaheptyl, 3-Butoxypropyl, 2-Methyl-3-oxahexyl. Vorzugsweise kann R³ auch die Bedeutung einer Phenylgruppe haben, die vorzugsweise einfach substituiert ist durch Cyano, Alkyl, Alkoxy, Alkoxyalkyl, und zwar bevorzugt in p-Stellung. R³ steht bevorzugt für eine Phenyloxyalkylgruppe wie Phenoxyethyl oder eine Phenylalkylgruppe, insbesondere steht R³ besonders bevozugt für Benzyl, Phenylethyl, Phenylpropyl. Alkylgruppen können Oxogruppen tragen, wie in 2-Phenyl-2-oxoethyl. Beispielhaft seien hier die Monomere Acryloylglycinalanin, Acryloylphenylalanin, Benzylacrylamid, Octylacrylamid genannt.

Des weiteren können optional neutrale Monomere in der einstufigen Pfropfpolymerisation zugesetzt werden, die vorzugsweise hydrophil sind. Auf diese Weise ist es möglich, das Quellverhalten der Pfropfpolymere in wässrigen Medien zu verbessern, ohne die Ladungsdichte der Pfropfpolymere zu erhöhen. Für diesen Zweck geeignete neutrale Monomere sind beispielsweise niedere Alkylacrylate, wie Methylacrylat, niedere Alkylmethacrylate, wie Methylmethacrylat. Bevorzugt werden Acrylamide der allgemeinen Formel 1 mit Y = R⁶ eingesetzt, worin R¹ und R² unabhängig voneinander Wasserstoff oder Methyl sind und worin R³ und R⁶ unabhängig voneinander Wasserstoff oder Alkyl mit bis zu 4 C-Atomen bedeuten. R³ und/oder R⁶ bedeuten damit Wasserstoff oder niederes Alkyl. Letzteres hat hier bevorzugt die Bedeutung Methyl, Ethyl, Butyl, Isopropyl, 3-Butyl oder Isobutyl sowie außerdem die Bedeutung von Alkoxyalkyl mit bis zu 4 C-Atomen, wie z. B. Methoxyethyl oder Ethoxyethyl. Beispielhaft seien hier Acrylamid (AAm), Dimethylacrylamid, Methacrylamid, Isopropylacrylamid, Methoxyethylacrylamid und Ethoxyethylacrylamid genannt.

Die eigentliche Pfropfpolymerisationsreaktion kann durch Cer(IV) auf dem hydroxylgruppenhaltigen Träger initiiert werden. Diese Reaktion findet normalerweise in verdünnten Mineralsäuren, wie z.B. in verdünnter Salpetersäure, statt, worin die hydrophoben Monomere kaum oder nicht löslich sind. Die Reaktion kann auch in verdünnter Schwefelsäure oder Salzsäure durchgeführt werden. Bevorzugt wird jedoch in verdünnter Salpetersäure gearbeitet. Durch den Zusatz eines Lösungsvermittlers oder eines Cosolvens, bevorzugt Dioxan, kann das hydrophobe Monomer gelöst und gepfropft werden. Als Cosolvens können auch Aceton, Dimethylacetamid, Dimethylformamid, Tetrahydrofuran, eingesetzt werden. Insbesondere bevorzugt wird jedoch mit Dioxan gearbeitet, weil es bei der Cer(IV)-initiierten Reaktion die höchste Pfropfausbeute und die wenigsten Nebenprodukte liefert. Zusätzlich sei hier bemerkt, dass auch andere Verfahren zur Pfropfpoylmerisation angewendet werden können. Bevorzugt sind Methoden, bei denen nur wenige Nebenprodukte, wie nicht kovalent gebundenes Polymer, entstehen, die abgetrennt werden müssen. Besonders interessant erscheinen Verfahren mit kontrollierter Radikalpolymerisation, wie zum Beispiel die Methode der Atomtransfer-Radikalpolymerisation (ATRP). Hier wird in einer ersten Stufe eine Initiatorgruppe in der gewünschten Dichte kovalent an die Trägeroberfläche gebunden. Eine Initiatorgruppe kann zum Beispiel ein über eine Esterfunktion gebundenes Halogenid sein, wie in einem 2-Brom-2-methylpropionsäureester. Die Pfropfpolymerisation erfolgt in einer zweiten Stufe in Anwesenheit von Kupfer(I)-Salzen.

Ist das hydrophobe Monomer nicht vollständig in der flüssigen Phase gelöst, was sich z. B. durch eine Trübung der Reaktionslösung oder durch Tröpfchen einer zweiten flüssigen Phase zeigt, erfolgt zwar eine Pfropfung durch Reaktion beider Monomere, aber das erhaltene Produkt verhält sich eher wie ein normaler Ionenaustauscher. Die Eigenschaften werden in diesem Fall also hauptsächlich vom geladenen Monomerbaustein bestimmt. Das heißt, dass das Mischpfropfpolymer so hergestellt werden muss, dass geladene und hydrophobe Funktionen im Pfropfpolymer in Lösung miteinander kooperieren können. Man versucht daher zur Reaktion die verdünnte Säure und das Cosolvens in einem für die spezielle Reaktion günstigsten Verhältnis einzusetzen. Üblicherweise wird zur Durchführung der Pfropfpolymerisation die Säure in einer wässrigen Lösung mit einer Konzentration im Bereich von 1 bis 0,00001 mol/l, bevorzugt von 0,1 bis 0,001, eingesetzt. Ganz besonders bevorzugt wird mit verdünnter Salpetersäure gearbeitet, die mit einer Konzentration im Bereich von 0,05 bis 0,005 mol/l eingesetzt wird. Zur Durchführung der Reaktion kann das Volumenverhältnis von verdünnter Säure zu geeignetem Cosolvens im Bereich von 30 : 70 bis 98 : 2 liegen. Bevorzugt wird in einem Volumenverhältnis von 40 : 60 bis 90 : 10 gearbeitet. Besonders gute Bindekapazitäten werden gefunden, wenn die verwendete verdünnte Säure und das Cosolvens in einem Volumenverhältnis in einem Bereich von 45 : 55 bis 75 : 25 liegt. Insbesondere trifft dieses zu, wenn mit einem Monomer mit Sulfonsäuregruppen in verdünnter Salpetersäure und Dioxan als Cosolvens gearbeitet wird.

Wird dagegen zuviel Cosolvens zugesetzt, sinkt die Ausbeute an Pfropfpolymer. In Folge kann an dem erhaltenen derivatisierten Trennmaterial nur wenig Protein gebunden werden. Die Ausbeute an Pfropfpolymer auf dem Trägermaterial kann gesteigert werden, indem zu einer bereits gestarteten Pfropfpolymerisation mit geladenem Monomeren weitere Lösung eines hydrophoben Monomers in Gegenwart eines Cosolvens zudosiert wird.

Durch weitere Versuchsreihen wurde gefunden, dass durch Pfropfpolymerisation derivatisierte Trennmaterialien mit erfindungsgemäß verbesserten Eigenschaften erhalten werden, wenn geeignete Trägermaterialien mit den in der folgenden Tabelle genannten Monomeren pfropfpolymerisiert werden.

**Tabelle 1: Monomere für die Mischpfropfpolymerisation.**

| Monomername | Kürzel | Struktur |
|---|---|---|
| 2-Acrylamido-2-methylpropansulfonsäure | AMPS | 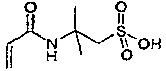 |
| Acrylsäure | AS | 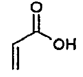 |
| N-Arylalkylacrylamide (z.B. Benzylacrylamid, Acryloylphenylalanin) | ArAAm | 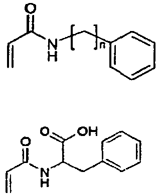 |
| N-Carboxyalkylacrylamide (z.B. Acryloyl-gamma-aminobuttersäure) | CAAAm | 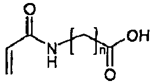 |
| N-Alkylacrylamide (z.B. Butylacrylamid) | AlkylAAm | 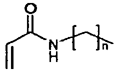 |

Exemplarisch wurden durch Kombination von zwei oder drei Monomeren die folgenden trägergebundenen Mischpfropfpolymere auf geeigneten Trägern, wie beispielsweise Fractogel TSK HW65 (M), welches identisch ist mit dem kommerziell erhältlichen Toyopearl HW-65 (M) (Hersteller: Tosoh, Japan, und wie in EP 0 006 199 beschrieben), hergestellt und im Hinblick auf ihre Eigenschaften, insbesondere auf ihre Bindekapazität, untersucht:
Poly(AMPS, AS, ArAAm) mit Benzylacrylamid
Poly(AMPS, ArAAm) mit Benzylacrylamid
Poly(AS, ArAAm) mit Benzylacrylamid, Acryloylphenylalanin
Poly(AMPS, ArAAm, AAm) mit Benzylacrylamid
Poly(AS, ArAAm, AAm) mit Benzylacrylamid
Poly(CAAAm, ArAAm) mit Carboxypropylacrylamid und Benzylacrylamid
Poly(AMPS, AlkylAAm) mit Butylacrylamid

Es wurde gefunden, dass sich niedere Alkylacrylamide (AlkyAAm) wie Butylacrylamid zwar mit Monomeren, die Sulfonsäure-Gruppen aufweisen, wie z. B. AMPS, copolymerisieren lassen, aber die derivatisierten Trägermaterialien lediglich Bindekapazitäten gegenüber Immunglobulin (IgG) im Bereich von bekannten Trennmaterialien zeigen, wie beispielsweise die des Pfropfpolymers aus reinem AMPS.

In diesem Zusammenhang wurde gefunden, dass die höheren Alkylgruppen, wie beispielsweise Octylgruppen einen positiven Beitrag zur Bindung von Proteinen leisten. Überraschenderweise hat es sich im Rahmen der Untersuchungen aber als besonders vorteilhaft herausgestellt, während der Herstellung von salztoleranten Ionenaustauschern dem Reaktionsgemisch aromatische Monomere (z. B. ArAAm) beizumischen. Diese Monomeren ermöglichen es, hydrophobe Gruppen in die ionische Oberflächenmodifizierung einzubauen. Je nach zugesetzter Menge an aromatischen Monomeren wird der hydrophobe Charakter der erhaltenen Materialien verstärkt und damit die Bindekapazität beeinflusst, so dass an sich in Abhängigkeit vom Molenbruch der hydrophoben Gruppen in dem Pfropfpolymer die Bindungskapazität beeinflusst werden kann. Es hat sich auch gezeigt, dass in Abhängigkeit von der Kombination der gewählten Monomere und von den Polymerisationsbedingungen das Verhältnis der Monomeren zueinander unterschiedlich gewählt werden muss, um hohe Bindungskapazitäten zu erzielen.

Weisen die Poly(acrylamid)-Pfropfpolymeren als geladene Gruppen nur Sulfonsäure-Gruppen auf, werden besonders vorteilhafte Eigenschaften gefunden, wenn der Anteil der geladenen Gruppen 35 bis 70 mol-% im Verhältnis zur Gesamtmenge des Pfropfpolymers ist. Dabei entspricht ein Trennmaterial mit 100 mol-% geladenen Gruppen einem reinen Kationenaustauscher ohne hydrophobe Gruppen.

Anders stellt sich die Situation dar, wenn neben anderen geladenen Gruppen das Pfropfpolymer Carboxy-Gruppen enthält, wie beispielsweise in einem Copolymer mit Acrylsäure, oder nur solche geladenen Gruppen vorhanden sind. In solchen Fällen werden verbesserte Bindekapazitäten gefunden, wenn der Anteil der geladenen Gruppen 60 bis 98 mol-% bezogen auf die Gesamtmenge des Pfropfpolymers beträgt. Besonders vorteilhafte Eigenschaften wurden für Materialien gefunden in denen der Anteil der geladenen Gruppen im Bereich von 70 bis 95 mol-% liegt.

Um Pfropfpolymere mit vorteilhaften Eigenschaften zu erhalten, werden geladene Monomere und hydrophobe Monomere in einem solchen Verhältnis zueinander gemischt, dass der Anteil der hydrophoben Komponente 1 - 90 mol-% im Verhältnis zur Gesamtmonomermenge beträgt, bevorzugt ist ein Anteil im Bereich von 3 - 70 mol-% bezogen auf die Gesamtmonomermenge. Bei der Verwendung von AMPS wird der Anteil der hydrophoben Komponente insbesondere so gewählt, dass er in einem Bereich von 20 - 60 mol% bezogen auf die Gesamtmonomermenge liegt. Bei der Verwendung von AS werden besonders gute Eigenschaften der Pfopfpolymere erzielt, wenn der Anteil der hydrophoben Komponente im Bereich von 5 - 50 mol-% liegt. Zur Herstellung der erfindungsgemäßen Trennmaterialien werden die Monomere normalerweise im Überschuss zu dem Trägermaterial gegeben. Dabei werden 0,05 bis 100 mol Gesamtmonomer je Liter sedimentiertes Polymermaterial eingesetzt, bevorzugt werden 0,15 - 25 mol/L eingesetzt.

Unter sedimentiertem Trägermaterial ist feuchtes Trägermaterial zu verstehen, das durch Sedimentation aus einer Suspension erhalten wird, das von überstehendem Lösungsmittel befreut ist. Üblicherweise wird entsprechendes Trägermaterial im feuchten Zustand gelagert. Zur erfindungsgemäßen Verwendung wird vorab überstehendes Lösungsmittel abgesaugt. Anschließend wird zur Durchführung der Derivatisierung ein abgemessenes Volumen oder eine abgewogene Menge (nutschfeuchtes Gel) in einem geeigneten Volumen oder in einer geeigneten Menge Monomerlösung suspendiert und der Pfropfpolymerisation unterzogen. Bei dem Trägermaterial kann es sich um ein organisches Polymermaterial handeln.

Die zweite Herstellungsvariante hat als zweistufiges Verfahren zwar den Nachteil einer zusätzlichen Reaktionsstufe, die Pfropfpolymerisation ist aber nicht beschränkt durch die Wirksamkeit des zugesetzten Cosolvens. In einem ersten Pfropfpolymerisationsschritt werden bevorzugt nur hydrophile Monomere gepfropft, die in dem flüssigen Reaktionsmedium gut löslich sind. Dabei enthält mindestens ein Monomer Carboxygruppen. Das Pfropfpolymer kann dann in einem zweiten Schritt durch eine polymeranaloge Reaktion hydrophob modifiziert werden. Dieser Schritt kann z. B. durch Kupplung von Benzylamin mit wasserlöslichem Carbodiimid an ein Poly(acrylsäure)-Pfropfpolymer erfolgen, wodurch ein gepfropftes Poly(benzylacrylamid) erhalten wird.

Als Monomere für das zweistufige Verfahren sind die bereits bei der einstufigen Pfropfpolymerisation erwähnten Monomere einsetzbar. Die Monomeren mit Carboxy-Gruppe können allein oder auch als Gemisch mit hydrophoben, neutralen Monomeren und/oder mit Monomeren mit Sulfonsäure-Gruppen in einer Pfropfpolymerisation eingesetzt werden. Bevorzugt werden Gemische mit neutralen Monomeren und/oder mit Monomeren mit Sulfonsäure-Gruppen eingesetzt. Besonders bevorzugt werden wasserlösliche Monomere mit Carboxy-Gruppe oder Gemische von wasserlösliche Monomeren mit Carboxy-Gruppe mit weiteren wasserlöslichen Monomeren. Besonders bevorzugt sind also folgende wasserlösliche Monomer mit Carboxy-Gruppe der allgemeinenFormel (1), 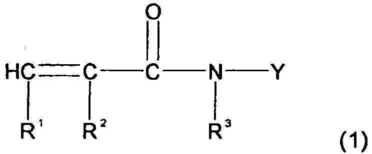 worin R¹, R² und Y unabhängig voneinander H oder CH₃ bedeuten, R³ die Bedeutung R⁴-COOM hat, wobei R⁴ geradkettiges oder verzweigtes Alkylen mit 2 bis 4 C-Atomen bedeutet, und M H, Na, K oder NH₄ bedeuten, oder der allgemeinen Formel (2), 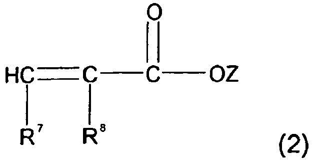 worin R⁷ und R⁸ unabhängig voneinander H oder CH₃, Z entweder M oder R⁴-COOM, wobei R⁴ geradkettiges oder verzweigtes Alkylen mit 2 bis 4 C-Atomen bedeutet, R⁷ auch COOM bedeuten kann, wenn Z M und R⁸ H ist, und M H, Na, K oder NH₄ bedeuten. Weiter wasserlösliche Monomere können die entsprechenden Sulfonsäuren der wasserlöslichen Monomer mit Carboxy-Gruppe sein, wobei die Gruppe R⁴-COOM durch R⁴-SO₃M ersetzt ist oder die bereits bei der einstufigen Pfropfpolymerisation erwähnten neutralen Monomere. Beispiel für wasserlösliche Monomer sind mit Carboxy-Gruppe sind Acrylsäure, Carboxyethylacrylamid, Carboxyethylacrylat, Carboxyethylmethacrylamid, Carboxymethylacrylamid, Carboxymethylacrylat, Carboxymethylmethacrylamid, Carboxypropylacrylamid und Carboxypropylmethacrylamid., Methacrylsäure und Maleinsäure. Beispiele für weitere wasserlösliche Monomere sind Acrylamid, 2-Acrylamidoethansulfonsäure, AMPS, Isopropylacrylamid, Methylacrylat, Methylmethacrylat, 2-Sulfoethylacrylat, 2-Sulfoethylmethacrylat, 3-Sulfopropylacrylat, 3-Sulfopropylmethacrylat.

Bei der Kupplungsreaktion von Benzylamin an z.B. Poly(acryloyl-gamma-aminobuttersäure)-Pfropfpolymere ist es möglich, nahezu alle Carboxygruppen umzusetzen, wenn das Benzylamin im Überschuss von ca. 4000 mol-% im Verhältnis zu den auf dem Träger gebundenen Carboxygruppen eingesetzt wird. Mit einem Überschuss an Kupplungsreagenz EDC (N-(3-Dimethylaminopropyl)-N'-ethylcarbodiimidhydrochlorid) von 300 mol-% im Verhältnis zu den auf dem Träger gebundenen Carboxygruppen erreicht man eine Umsetzung von ca. 90% der vorhandenen Carboxygruppen zu Amidgruppen. Ziel der erfindungsgemäßen Reaktion ist es aber, nur einen Teil der Carboxygruppen umzusetzen, damit genügend ionenaustauschende Gruppen im Pfropfpolymer vorhanden bleiben. Wenn im obigen Beispiel nur 60 mol-% EDC eingesetzt werden, werden nur ca. 30% der Carboxygruppen umgesetzt und die Bindungskapazität des Produktes in Anwesenheit von Salz ist doppelt so hoch wie im obigen Fall.

Je nach dem, wie hoch der gewünschte Anteil der umgesetzten Carboxygruppen sein soll, wird der Überschuss des zu kuppelnden Monomers gewählt. So kann der Überschuss des zu kuppelnden Monomers im Bereich von 100 bis 10 000 mol-% im Verhältnis zu den auf dem Träger gebundenen Carboxygruppen liegen, während das Kupplungsreagenz mit einem Überschuss im Bereich von 60 bis 2000 mol-% im Verhältnis zu den auf dem Träger gebundenen Carboxygruppen eingesetzt wird. Selbstverständlich wird das Verhältnis sowohl des zu kuppelnden Monomers als auch des Kupplungsreagenzes so gewählt, dass ausreichend Carboxygruppen umgesetzt werden können, und ein Trennmaterial hergestellt werden kann, welches nach Durchführung der zweiten Reaktionsstufe vorteilhafte, bzw. verbesserte Eigenschaften aufweist und zur Abtrennung der Zielmoleküle, wie z. B. von geladenen Biopolymeren aus Flüssigkeiten, wie beispielsweise Zellkulturüberständen, geeignet ist.

Bei hohen Oberflächendichten zum Beispiel von Poly(acrylsäure) wurden unter den gewählten Bedingungen bei einem Überschuss von Amin und einem Unterschuss von EDC im Verhältnis zu den auf dem Träger gebundenen Carboxygruppen ca. 30% der vorhandenen Carboxygruppen umgesetzt. Durch einen großen Überschuss von Kupplungsreagenz ist es aber auch möglich, einen höheren Anteil der Carboxygruppen umzusetzen. Gegen diese Vorgehensweise spricht jedoch bei Umsetzungen im industriellen Maßstab ein starker Anstieg der Kosten der zweistufigen Herstellung. Aus wirtschaftlichen Gründen stellt daher diese Vorgehensweise keine wirkliche Alternative dar.

Wesentlich günstiger ist die Herstellung eines Mischpfropfpolymers aus einem Gemisch aus Monomeren mit Carboxy- beziehungsweise Sulfonsäure-Gruppen. Beispielhaft sei hier ein Gemsich aus AMPS und AS als Precursor genannt, da hier durch die Sulfonsäure-Gruppen auch bei gegebenenfalls vollständigem Umsatz der Carboxygruppen immer noch ionenaustauschende Gruppen im Pfropfpolymer vorhanden sind. Ein vollständiger Umsatz kann insbesondere bei geringen Pfropfpolymerdichten, wie oben bereits beschrieben, durch einen Überschuss des Kupplungsreagenz EDC von mindestens 300 mol% im Verhältnis zu den auf dem Träger gebundenen Carboxygruppen erreicht werden. Jedoch können auch hier im Allgemeinen bei hohen Pfropfpolymerdichten die Carboxygruppen nicht immer vollständig umgesetzt werden. So wurde gefunden, dass aus einem Pfropfpolymer, bestehend aus ca. 30 mol-% AMPS- und 70 mol-% Acrylsäureeinheiten, durch Kupplung von Benzylamin ein Pfropfpolymer erhalten wird, das neben ca. 20 mol-% Benzylarcrylamideinheiten immer noch 50 mol-% Acrylsäureeinheiten enthält. Es besteht also aus drei Monomerbausteinen, obwohl nach dem ursprünglichen Syntheseplan, bei dem durch Einsatz von 100 - 150 mol-% EDC vollständiger Umsatz erwartet wurde, nur zwei Bausteine vorhanden sein sollten.

Für eine polymeranaloge Reaktion an dem Pfropfpolymer, bestehend aus AMPS und AS, wurden beispielsweise 3 mol Benzylamin je Liter sedimentiertes Polymermaterial eingesetzt. Als Kupplungsreagenz wurden 0,2 mol/L EDC zugegeben, was ungefähr 100 mol-% im Verhältnis zu den auf dem Träger gebundenen Carboxygruppen entspricht.

Um geeignete Pfropfpolymere mit Carboxy-Gruppen für die hydrophobe Modifizierung zu erhalten, wird im Allgemeinen mindestens ein Monomer mit Carboxy-Gruppen in Wasser gelöst und mit möglicherweise vorhandenen weiteren Monomeren so gemischt, dass der Anteil der Komponente mit Carboxygruppen 1 - 100 mol-% im Verhältnis zur Gesamtmonomermenge beträgt, bevorzugt sind 10 - 100 mol-%. Die Monomeren werden normalerweise im Überschuss zu dem Trägermaterial gegeben. Dabei werden 0,05 bis 100 mol Gesamtmonomer je Liter sedimentiertes Polymermaterial eingesetzt, bevorzugt werden 0,15 - 25 mol/L eingesetzt. Zu der von Sauerstoff befreiten wässerigen Suspension wird eine, idealer Weise ebenfalls von Sauerstoff befreite, Lösung des Cer(IV)-Salzes in Mineralsäure, bevorzugt Ammoniumcer-IV-nitrat in Salpetersäure, unter Rühren bei einer Temperatur von 5 - 95 °C, bevorzugt von 20 - 70 °C, zugegeben und anschließend für die Dauer von 0,5 bis 72 Stunden, bevorzugt 2 bis 20 Stunden, bei dieser Temperatur gerührt. Die Konzentrationen in der wässrigen Lösung, die sich nach Zugabe der Cer(IV)-Salzlösung einstellen, sind so gewählt, dass der pH bei 0 - 5, bevorzugt bei 1 - 3 liegt. Die Cer(IV)-Konzentration wird so eingestellt, dass sie in der Reaktionslösung 0,00001 - 0,5 mol/L, bevorzugt 0,001 - 0,1 moI/L, beträgt.

In der Tabelle 2 sind Beispiele gegeben für primäre Amine, die an trägergebundene Mischpfropfpolymere aus AMPS und AS (auf Fractogel^{®} TSK HW65 M) gekuppelt worden sind. Darüber hinaus ist es auch möglich, mehrere Amine an das Trägermaterial zu kuppeln oder Mischungen von Aminen für die Kupplungsreaktion zu verwenden. Entsprechende Beispiele sind auch in Tabelle 3 wiedergegeben. Darüber hinaus können alle Amine eingesetzt werden, die zu den bereits bei der einstufigen Pfropfpolymerisation als hydrophobe Monomerbausteine erwähnten Acrylamiden führen. Dem Fachmann ist bekannt, dass beim Kuppeln von Aminbausteinen mit Carboxygruppen eine alternative Kupplungsmethode gewählt werden muss, zum Beispiel über die mit EDC hergestellten Hydroxysuccinimidester der Pfrofpolymere.

Es wurde darüber hinaus gefunden, dass ebenso wie Mischpfropfpolymere mit aromatischen Gruppen, die teilweise schon durch einstufige Synthese herstellbar sind, auch Alkygruppen, wie zum Beispiel Octylgruppen, in einem Pfropfpolymer zusammen mit Sulfonsäure- und Carboxy-Gruppen zu einer Verbesserung der Bindungseigenschaften führen im Vergleich zu nicht hydrophob modifizierten Kationenaustauschern.

Somit können durch die zweistufige Synthese auf einfache Weise, ausgehend von zum Beispiel einem Poly(acrylsäure)-Precursor, Pfropfpolymere mit unterschiedlichen hydrophoben Anteilen aber gleichen Pfropfdichten hergestellt werden. In Tabelle 3 zeigen die Ergebnisse der in den Zeilen 6 - 8 wiedergegebenen Beispiele eine solche Reihe mit unterschiedlichen Anteilen in mol-% an Benzylgruppen im Pfropfpolymer. Durch Versuche wurde auch gefunden, dass es ein Bindungsoptimum bei ca. 25 mol-% Benzylgruppen im Pfropfpolymer gibt. Die Wiederfindung eines polyclonalen IgG ist umso höher, je weniger Benzylgruppen im Pfropfpolymer vorhanden sind. Durch Versuche mit monoclonalen Antikörpern konnte gezeigt werden, dass die Wiederfindung bei ca.
25 mol-% Benzylgruppen im Pfropfpolymer auch annähernd bei 100% liegt. Die Elution bei monoklonalen Proteinen lässt sich leichter optimieren, da im Gegensatz zu polyklonalen Proteinen sehr ähnliche Spezies abgelöst werden müssen.

Zur Beurteilung der Trennmaterialien wird im Allgemeinen die statische Bindungskapazität von polyklonalem human IgG (Gammanorm) bei 75 mM und 150 mM Natriumchlorid-Lösung im Bereich pH 5 - 7 untersucht. Der Leitwert der 150 mM Salzkonzentration entspricht derjenigen eines Zellkulturüberstands (häufig 10 - 15 mS/cm). Die Bestimmung der Bindungskapazität erfolgt nach Elution des IgG durch Erhöhen der Salzkonzentration auf ca. 1 M NaCl.

Die Bestimmung der dynamischen Bindungskapazität wird ebenfalls in Anwesenheit von 150 mM Natriumchlorid vorgenommen. Dazu wird bis zu einem Durchbruch von 10% mit IgG Lösung beladen. Die Elution erfolgt durch Erhöhen der Salzkonzentration auf ca. 1 M NaCl bei dem pH des Bindungspuffers. Eine Verbesserung der Wiederfindung von IgG kann durch gleichzeitiges Erhöhen der Salzkonzentration und des pH-Wertes erreicht werden.

Die Beispiele in Tabelle 3 zeigen, dass die Trennmaterialien mit Mischpfropfpolymeren wesentlich höhere dynamische Bindungskapazitäten erreichen als die Vergleichsgele, die keine hydrophoben Anteile im Pfropfpolymer haben. Hohe Bindungskapazitäten erzielen die Mischpfropfpolymere bei pH 5,5. Bei diesem pH Wert ist das Mischpfropfpolymer negativ geladen. Das IgG trägt dagegen mehr positive als negative Ladungen (pH < pl). Damit erfolgt die Bindung hauptsächlich durch ionische Wechselwirkungen. Werden die positiven Ladungen auf einem polyklonalen IgG durch Umpuffern auf pH 6,5 reduziert und seinem pl angenähert, wird der Durchbruchswert von 10 % bereits bei sehr kleinen Mengen an IgG erreicht. Dieses Bindungsverhalten zeigen alle Mischpfropfpolymere unabhängig davon, ob ihre Synthese direkt nur durch einen Pfropfpolymerisationsschritt erfolgt ist oder durch hydrophobe Modifizierung eines geeigneten hydrophilen Pfropfpolymers.

Zusammenfassend kann gesagt werden, dass hiermit besonders geeignete Trennmaterialien vorliegen für die lonenaustauschchromatographie bei einem Leitwert, wie er üblicherweise in Zellkulturüberständen vorliegt, die ein Mischpfropfpolymer enthalten, das mindestens aus einer Monomereinheit besteht, die eine negative Ladung in Form einer Sulfonsäure oder Carbonsäure trägt und daneben Ester- oder Amidgruppen und Alkyl- und/oder Alkylengruppen und insgesamt maximal 8 C Atome aber keine Arylgruppen enthält, oder das eine negative Ladung in Form einer Sulfonsäure oder Carbonsäure trägt und daneben Alkyl- und/oder Alkylengruppen aber keine Arylgruppen enthält, und mindestens eine Monomereinheit, die eine Estergruppe und als hydrophobe Gruppe ein geradkettiges oder verzweigtes Alkyl mit 4 bis zu 18 C-Atomen oder eine Arylgruppe trägt oder die mindestens eine Amidgruppe und als hydrophobe Gruppen geradkettige oder verzweigte Alkyle mit insgesamt 6 bis zu 18 C-Atomen oder eine Arylgruppe enthält. Das Verhältnis der Monomereinheiten mit negativer Ladung zu den Monomereinheiten mit hydrophober Gruppe liegt bevorzugt in einem Bereich zwischen 99:1 bis 10:90.

Die hydrophoben Anteile in den Pfropfpolymeren ermöglichen, dass eine Bindung bei erhöhter Salzkonzentration stattfindet, da bei den reinen Kationenaustauschern durch die anwesenden Salzionen die Ladungen abgeschirmt werden, so dass die ionische Wechselwirkung zu schwach ist, um Proteine an die Trennmaterialien zu binden. Die zusätzliche hydrophobhydrophob-Wechselwirkung mit den Proteinen ermöglicht eine ausreichend feste Bindung.

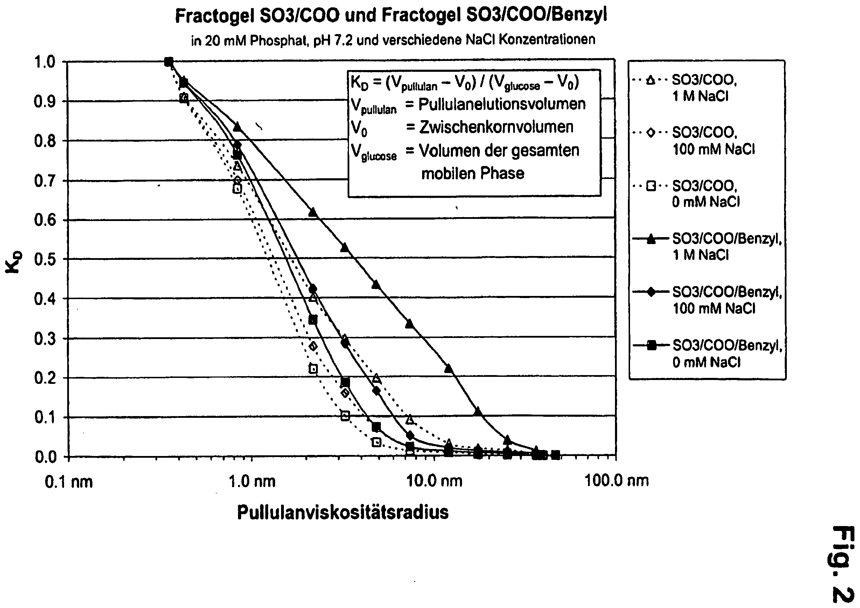

Diese hydrophobe Wechselwirkung findet wahrscheinlich auch innerhalb von oder zwischen Pfropfpolymerketten statt und führt zu reversiblen Verknüpfungen dieser Ketten (C. Tribet, Biochimie, 1998, 80, 461-473). Zur Charakterisierung wurde daher ein in einer zweistufigen Synthese hergestelltes, hydrophob modifiziertes Mischpfropfpolymer auf einem porösen Träger und sein Poly(AMPS, AS)-Precursor gebunden an Fractogel^{®} TSK HW65 M mit der inversen Größenausschluss-chromatographie analysiert (Abbildung 2). Obwohl beide Gele dieselbe Pfropfdichte haben, wurde gefunden, dass das Porensystem des hydrophoben Mischpfropfpolymers unter nicht-bindenden Bedingungen, insbesondere in Anwesenheit von 1 M Natriumchlorid, besser zugänglich ist. Das hydrophobere Pfropfpolymer liegt also unter Hochsalzbedingungen kompakter auf der Oberfläche des porösen Trägers. Trotzdem zeigt auch das Porensystem mit dem hydrophoberen Pfropfpolymer bei abnehmender Natriumchloridkonzentration kleinere Verteilungskoeffizienten KD. Damit ist diese Oberflächenstruktur bei Natriumchloridkonzentrationen kleiner als 1 M stark gequollen und sehr gut zugänglich für die im wässrigen Puffer gelösten Komponenten.

Die erfindungsgemäßen Materialien können zur Abtrennung von geladenen Biopolymeren verwendet werden. Bevorzugt werden sie zur Abtrennung von Proteinen eingesetzt, insbesondere von Antikörpern, die polyclonal oder monoclonal sein können, von Antikörperfragmenten oder Fusionsproteinen, die einen Antikörperteil enthalten. Es können aber auch andere Biopolymere abgetrennt werden wie z.B. Polypeptide, Nucleinsäuren, Viren, eukaryontische oder prokaryontische Zellen. Durch die Abtrennung können die Biopolymere gereinigt, isoliert oder entfernt werden.

Die Zielmoleküle werden von mindestens einer oder mehreren anderen Substanzen aus einer Probe abgetrennt, wobei die Probe, die das Zielmolekül enthält, in einer Flüssigkeit gelöst ist, die mit dem erfindungsgemäßen Material in Kontakt gebracht wird. Kontaktzeiten sind üblicherweise im Bereich von 30 Sekunden bis zu 24 Stunden. Vorteilhaft ist es nach den Grundsätzen der Flüssigchromatographie zu arbeiten, indem die Flüssigkeit über eine Chromatographiesäule, die das erfindungsgemäße Trennmaterial enthält geleitet wird. Die Flüssigkeit kann allein durch ihre Schwerkraft durch die Säule laufen oder mit einer Pumpe hindurchgepumpt werden. Eine alternative Methode ist die Batch-Chromatographie. Hierbei wird das Trennmaterial mit der Flüssigkeit durch Rühren oder Schütteln solange vermischt wie die Zielmoleküle, bzw. Biopolymere benötigen, um an das Trennmaterial binden zu können. Ebenfalls kann nach den Grundsätzen des chromatographischen Fliessbetts gearbeitet werden, indem die aufzutrennende Flüssigkeit beispielsweise in eine das Trennmaterial enthaltende Suspension gegeben wird, wobei das Trennmaterial so gewählt ist, dass es durch seine hohe Dichte und/oder einen magnetischen Kern für die gewünschte Abtrennung geeignet ist.

Das Zielmolekül bindet üblicherweise an das erfindungsgemäße Material. Anschließend kann das Trennmaterial mit einem Waschpuffer gewaschen werden, der vorzugsweise die gleiche Ionenstärke und den gleichen pH hat wie die Flüssigkeit, in der das Zielmolekül mit dem Trennmaterial in Kontakt gebracht wird. Der Waschpuffer entfernt alle Substanzen, die nicht an das Trennmaterial binden. Es können weitere Waschschritte mit geeigneten Puffern folgen. Die Desorption des gebundenen Zielmoleküls erfolgt durch Erhöhen der Ionenstärke im Eluenten. Durch Verändern des pH-Wertes im Eluenten, bevorzugt durch Erhöhen des pH-Wertes, durch Einsatz eines Eluenten mit anderer Polarität als der des Adsorptionspuffers oder gegebenenfalls durch Verwendung von einem im Eluenten gelösten Tensid, ist ebenfalls eine Elution möglich bevorzugt in Kombination mit einer Erhöhung der Ionenstärke. Das Zielmolekül kann so gereinigt und aufkonzentriert in dem Eluenten erhalten werden. Üblicherweise hat das Zielmolekül nach der Desorption eine Reinheit von 70% bis zu 99%, bevorzugt 85% bis 99%, besonders bevorzugt 90% - 99%.

Es besteht aber auch die Möglichkeit, dass das Zielmolekül in der Flüssigkeit verbleibt, andere Begleitsubstanzen aber an das Trennmaterial binden. Das Zielmolekül erhält man dann direkt durch Auffangen des Säuleneluats im Durchfluss. Dem Fachmann ist bekannt, wie er die Bedingungen, insbesondere den pH und/oder die Leitfähigkeit anpassen muss, um ein spezielles Biopolymer an einen Trennmaterial zu binden, oder ob es für die Reinigungsaufgabe von Vorteil ist, das Zielmolekül nicht zu binden.

Die Biopolymere stammen vorwiegend, aber nicht ausschließlich, aus flüssigen Quellen oder sind in ihnen enthalten, wie zum Beispiel in Körperflüssigkeiten wie Blut, Seren, Speichel oder Urin, Organextrakten, Milch, Molke, Pflanzenextrakten, Zellextrakten, Zellkulturen, Fermentationsbrühen, tierischen Extrakten. Antikörper können zum Beispiel aus Säugerzellen von Nagetieren oder Hybridoma-Zellen stammen.

Das erfindungsgemäße Trennmaterial kann in einem ersten chromatographischen Reinigungsschritt (Capture-Schritt) eines Aufarbeitungsprozesses für ein Biopolymer verwendet werden. Normalerweise ist es von Vorteil, wenn die feststoffbelasteten Rohlösungen wie z.B. Zellsuspensionen oder Zellhomogenaten vor dem Capture-Schritt zuerst filtriert werden, um grobe Verunreinigungen, wie ganze Zellen oder Zelltrümmer, zu entfernen. Ein Vorteil der vorliegenden Erfindung, wie oben beschrieben, besteht darin, dass die lonenstärke des Zellkulturüberstandes nicht angepasst werden muss. Dem Capture-Schritt folgen im Allgemeinen, wenn die gewünschte Reinheit des Biopolymers noch nicht erreicht ist, weitere chromatographische Reinigungsstufen mit anderen Trennmaterialien, die in der Lage sind die verschiedenen restlichen Verunreinigungen zu entfernen. Da die Reihenfolge, in der die Trennmaterialien angewendet werden, einen Einfluss auf die Gesamtleistung des Prozesses haben kann, kann es in bestimmten Fällen von Vorteil sein, das erfindungsgemäße Trennmaterial erst in der zweiten, dritten oder vierten Reinigungsstufe einzusetzen.

Die Erfindung betrifft ebenfalls einen Kit für die Aufreinigung oder die Abtrennung von Biopolymeren von einer oder mehreren anderen Substanzen aus einer Flüssigkeit. Das Kit besteht aus einer Chromatographiesäule, die mit dem erfindungsgemäßen Trennmaterial gepackt ist, einem oder mehreren Puffern und einem Beipackzettel mit einer schriftlichen Anleitung. Die Flüssigkeit wird mit einem Puffer auf einen pH von z.B. 5,5 eingestellt und mit der Chromatographiesäule in Kontakt gebracht. Zuerst wird die Säule mit einem Waschpuffer gewaschen, so dass man eine Fraktion der nichtbindenden Bestandteile erhält, dann werden mit einem Elutionspuffer mit höherer Ionenstärke, z.B. mit 1 M NaCl-Lösung, die Biopolymere desorbiert und in einer zweiten Fraktion erhalten.

Die vorliegende Beschreibung ermöglicht es dem Fachmann die Erfindung umfassend anzuwenden. Auch ohne weitere Ausführungen wird daher davon ausgegangen, dass ein Fachmann die obige Beschreibung im weitesten Umfang nutzen kann.

Bei etwaigen Unklarheiten versteht es sich von selbst, die zitierten Veröffentlichungen und Patentliteratur heranzuziehen. Dementsprechend gelten diese Dokumente als Teil der Offenbarung der vorliegenden Beschreibung.

Zum besseren Verständnis und zur Verdeutlichung der Erfindung werden im Folgenden Beispiele gegeben, die im Rahmen des Schutzbereichs der vorliegenden Erfindung liegen. Diese Beispiele dienen auch zur Veranschaulichung möglicher Varianten. Aufgrund der allgemeinen Gültigkeit des beschriebenen Erfindungsprinzips sind die Beispiele jedoch nicht geeignet, den Schutzbereich der vorliegenden Anmeldung nur auf diese zu reduzieren.

Weiterhin versteht es sich für den Fachmann von selbst, dass sich sowohl in den gegebenen Beispielen als auch in der übrigen Beschreibung die in den Zusammensetzungen enthaltenen Komponentenmengen in der Summe immer nur zu 100 Gew. bzw. mol-% bezogen auf die Gesamtzusammensetzung aufaddieren und nicht darüber hinausgehen können, auch wenn sich aus den angegebenen Prozentbereichen höhere Werte ergeben könnten. Sofern nichts anderes angegeben ist, gelten %-Angaben als Gew.- oder mol-%, mit Ausnahme von Verhältnissen, die in Volumenangaben wiedergegeben sind, wie beispielsweise Elutionsmittel, zu deren Herstellung Lösungsmittel in bestimmten Volumenverhältnissen im Gemisch verwendet werden.

Die in den Beispielen und der Beschreibung sowie in den Ansprüchen gegebenen Temperaturen gelten immer in °C.

### Beispiele

### Beispiel 1:

### Vorschrift zur Herstellung eines Mischpfropfpolymers aus 2-Aaylamido-2-methylpropansulfonsäure und Benzylacrylamid (Ansatz 05SW136)

### Durchführung:

In einer Glasreaktionsapparatur mit einem Blattrührer wird eine Suspension aus 70 g nutschfeuchtem Fractogel TSK HW65 (M) (mit verdünnter Mineralsäure und VE-Wasser gewaschen), einer Lösung von 32,3 g Benzylacrylamid, in 250ml Dioxan und einer Lösung von 41,5 g 2-Acrylamido-2-methylpropansulfonsäure und 25 g 32%ige Natronlauge in 50 ml VE-Wasser hergestellt. Mit VE-Wasser wird auf 475 ml aufgefüllt und mit 32%iger Natronlage oder 65%iger Salpetersäure auf pH 4 gestellt.

Eine Starterlösung aus 13,7 g Ammoniumcer-IV-nitrat und 1,2 g 65%ige Salpetersäure in 25 ml VE-Wasser wird in einem Tropftrichter mit Druckausgleich vorgelegt. Die gesamte Apparaturwird durch wiederholtes (3x) Evakuieren und Entspannen mit Stickstoff inertisiert. Anschließend wird die Suspension in der Apparatur auf 70 °C erwärmt.

Zu der inertisierten Suspension wird bei einer Innentemperatur von 70 °C die Starterlösung unter Rühren zugegeben. Unter leichtem Stickstoffstrom wird die Suspension 17 Stunden bei 70 °C gerührt. Danach wird die Reaktionslösung über eine Glasfilterfrltte (P2) abgesaugt und das Gel auf der Fritte mit jeweils 100 ml Waschlösung wie folgt gewaschen:
8x 0,5 M Schwefelsäure, 0,2M Ascorbinsäure
3x VE-Wasser
2x 1 M Natronlauge
4x VE-Wasser
5x Aceton
5x Wasser

Das Gel wird in 200 mL VE-Wasser suspendiert und mit 25%iger Salzsäure auf pH 7 eingestellt. Die Lagerung erfolgt in 20%igem Ethanol bei Raumtemperatur.

### Beispiel 2:

### Vorschrift zur Herstellung eines Mischpfropfpolymers aus Acrylsäure und Benzylacrylamid (Ansatz 06SW297)

### Durchführung:

In einer Glasreaktionsapparatur mit einem Blattrührer wird eine Suspension aus 77,9 g nutschfeuchtem Fractogel TSK HW65 (M) (mitverdünnter Mineralsäure und VE-Wasser gewaschen), einer Lösung von 1,34g Benzylacrylamid in 14,5 ml Dioxan und einer Lösung von 18,0 g Acrylsäure in 50 ml VE-Wasser hergestellt. Mit 32%iger Natronlauge wird auf pH 4 gestellt und mit VE-Wasser auf 375 ml aufgefüllt.

In einem Tropftrichter mit Druckausgleich werden weitere 6,72g Benzylacrylamid in 73 ml Dioxan gelöst und mit VE-Wasser auf 100 ml aufgefüllt.

Eine Starterlösung aus 9,6 g Ammoniumcer-IV-nitrat und 1,2 g 65%ige Salpetersäure in 25 ml VE-Wasser wird in einem zweiten Tropftrichter mit Druckausgleich vorgelegt. Die gesamte Apparatur wird durch wiederholtes (3x) Evakuieren und Entspannen mit Stickstoff inertisiert. Anschließend wird die Suspension in der Apparatur auf 55 °C erwärmt.

Zu der inertisierten Suspension wird bei einer Innentemperatur von 55 °C die Starterlösung unter Rühren zugegeben. Unter leichtem Stickstoffstrom wird die Suspension bei 55 °C gerührt und alle 30 min werden jeweils 20 ml der Benzylaaylamid-Dioxan-Lösung zugegeben. Insgesamt wird die Reaktionssuspension noch 17 Stunden nach Starterzugabe bei 55°C gerührt. Danach wird die Reaktionslösung über eine Glasfilterfritte (P2) abgesaugt und das Gel auf der Fritte mit jeweils 100 ml Waschlösung wie folgt gewaschen:
2x 0,5 M Schwefelsäure/0,2 M Ascorbinsäure - Aceton 1:1 (V/V)
8x 0,5M Schwefelsäure, 0,2M Ascorbinsäure
3x VE-Wasser
2x 1 M Natronlauge

Das Gel wird in 200 mL 1 M Natronlauge suspendiert und 20 Stunden geschüttelt, nach Absaugen auf der Fritte wird das Gel mit jeweils 100 ml Waschlösung wie folgt weiter gewaschen:
2x 1 M Natronlauge
5x VE-Wasser

Das Gel wird in 200 mL VE-Wasser suspendiert und mit 25%iger Salzsäure auf pH 7 eingestellt. Die Lagerung erfolgt in 20%igem Ethanol bei Raumtemperatur.

### Belspiel 3:

### Vorschrift zur Herstellung eines Mischpfropfpolymers aus 2-Acrylamido-2-methylpropansulfonsäure, Acrylsäure und Benzylacrylamid (Ansatz 06SW085)

### Durchführung:

In einer Glasreaktionsapparatur mit einem Blattrührer wird eine Suspension aus 69 g nutschfeuchtem Fractogel TSK HW65 (M) (mit verdünnter Mineralsäure und VE-Wasser gewaschen), einer Lösung von 32,2 g Benzylacrylamid in 250ml Dioxan, einer Lösung von 25,9 g 2-Acrylamido-2-methylpropansulfonsäure und 15,6 g 32%ige Natronlauge in 50 ml VE-Wasser und 9,0 g Acrylsäure hergestellt. Mit VE-Wasserwird auf 475 ml aufgefüllt und mit 32%iger Natronlauge oder 65%iger Salpetersäure auf pH 4 gestellt.

Eine Starterlösung aus 13,7 g Ammoniumcer-IV-niUat und 1,2 g 65%ige Salpetersäure in 25 ml VE-Wasser wird in einem Tropftrichter mit Druckausgleich vorgelegt. Die gesamte Apparaturwird durch wiederholtes (3x) Evakuieren und Entspannen mit Stickstoff inertisiert. Anschließend wird die Suspension in der Apparatur auf 55 °C erwärmt.

Zu der inertisierten Suspension wird bei einer Innentemperatur von 55 °C die Starterlösung unter Rühren zugegeben. Unter leichtem Stickstoffstrom wird die Suspension 17 Stunden bei 55 °C gerührt. Danach wird die Reaktionslösung über eine Glasfilterfritte (P2) abgesaugt und das Gel auf der Fritte mit jeweils 100 ml Waschlösung wie folgt gewaschen:
8x 0.5M Schwefelsäure, 0,2M Ascorbinsäure
3x VE-Wasser
2x 1 M Natronlauge

Das Gel wird in 200 mL 1 M Natronlauge suspendiert und 20 Stunden geschüttelt, nach Absaugen auf der Fritte wird das Gel mit jeweils 100 ml Waschlösung wie folgt weiter gewaschen:
2x 1 M Natronlauge
4x VE-Wasser
5x 0,5M Schwefelsäure, 0,2M Ascorbinsäure
5x VE-Wasser

Das Gel wird in 200 mL VE-Wasser suspendiert und mit 25%iger Salzsäure auf pH 7 eingestellt. Die Lagerung erfolgt in 20%igem Ethanol bei Raumtemperatur.

### Beispiel 4:

### Vorschrift zur Herstellung eines Mischpfropfpolymers aus2-Acrylamido-2-methylpropansutfonsäure und Acrylsäure (Ansatz 05PP131)

### Durchführung:

In einer Glasreaktionsapparatur mit einem Blattrührerwird eine Suspension aus 140g nutschfeuchtem Fractogel TSK HW65 (M) (mit verdünnter Mineralsäure und VE-Wasser gewaschen) und einer Lösung aus 33,6 g 32%ige Natronlauge in 120 ml VE-Wasser, 46,6 g 2-Acrylamido-2-methylpropansulfonsäure (Zugabe unter Eiskühlung) und 16,2 g Acrylsäure hergestellt. Mit VE-Wasser wird auf 400 ml aufgefüllt und mit 65%iger Salpetersäure auf pH 3 gestellt.

Eine Starterlösung aus 2,8 g Ammoniumcer-IV-nitrat und 0,7 g 65%ige Salpetersäure in 50 ml VE-Wasserwird in einem Tropftrichter mit Druckausgleich vorgelegt. Die gesamte Apparatur wird durch wiederholtes (3x) Evakuieren und Entspannen mit Stickstoff inertisiert. Anschließend wird die Suspension in der Apparatur auf 42 °C erwärmt.

Zu der inertisierten Suspension wird bei einer Innentemperatur von 42 °C die Starterlösung unter Rühren zugegeben. Unter leichtem Stickstoffstrom wird die Suspension 5 Stunden bei 42 °C und anschließend noch 17 Stunden bei Raumtemperatur gerührt. Danach wird die Reaktionslösung über eine Glasfilterfritte (P2) abgesaugt und das Gel auf der Fritte mit jeweils 200 ml Waschlösung wie folgt gewaschen:
7x VE-Wasser
8x 1 M Schwefelsäure, 0,2 M Ascorbinsäure
5x VE-Wasser
3x 1 M Natronlauge
3x VE-Wasser
1 x 50 mM Phosphat-Puffer pH 7,0
2x VE-Wasser
2x 20% Ethanol/150mM Natriumchlorid

Die Lagerung erfolgt in 20%igem Ethanol/150 mM Natriumchlorid-Lösung bei Raumtemperatur.

### Beispiel 5:

### Vorschrift zur Herstellung eines Mischpfropfpolymers aus 2-Acrylamido-2-methylpropansulfonsäure und Acrylsäure, (Ansatz 06PP066)

### Durchführung:

In einer Glasreaktionsapparatur mit einem Blattrührer wird eine Suspension aus 210g nutschfeuchtem Fractogel TSK HW65 (M) (mit verdünnter Mineralsäure und VE-Wasser gewaschen) und einer Lösung aus 56,1 g 32%ige Natronlauge in 150 ml VE-Wasser, 77,7 g 2-Acrylamido-2-methylpropansulfonsäure (Zugabe unter Eiskühlung) und 27,0 g Acrylsäure hergestellt. Mit VE-Wasser wird auf 660 ml aufgefüllt und mit 65%iger Salpetersäure auf pH 3 gestellt.

Eine Starterlösung aus 20,7 g Ammoniumcer-IV-nitrat und 7,2 g 65%ige Salpetersäure in 90 ml VE-Wasser wird in einem Tropftrichter mit Druckausgleich vorgelegt. Die gesamte Apparaturwird durch wiederholtes (3x) Evakuieren und Entspannen mit Stickstoff inertisiert. Anschließend wird die Suspension in der Apparatur auf 55 °C erwärmt.

Zu der inertisierten Suspension wird bei einer Innentemperatur von 55 °C die Starterlösung unter Rühren zugegeben. Unter leichtem Stickstoffstrom wird die Suspension 3 Stunden bei 55 °C gerührt. Danach wird die Reaktionslösung über eine Glasfilterfritte (P2) abgesaugt und das Gel auf der Fritte mit jeweils 300 ml Waschlösung wie folgt gewaschen:
7x VE-Wasser
8x 0,5 M Schwefelsäure, 0,2 M Ascorbinsäure
5x VE-Wasser
2x 1 M Natronlauge

Das Gel wird in 600 mL 1 M Natronlauge suspendiert und 20 Stunden geschüttelt, nach Absaugen auf der Fritte wird das Gel mit jeweils 100 ml Waschlösung wie folgt weiter gewaschen:
2x 1 M Natronlauge
3x VE-Wasser
1 x 50 mM Phosphat-Puffer pH 7,0
2x VE-Wasser
2x 20% Ethanol/150mM Natriumchlorid

Die Lagerung erfolgt in 20%igem Ethanol/150 mM Natriumchlorid-Lösung bei Raumtemperatur.

### Beispiel 6:

### Vorschrift zur Herstellung eines Mischpfropfpolymers aus 2-Acrylamido-2-methylpropansulfonsäure und Acrylsäure (Ansatz 06PP189)

Durchführung siehe Vorschrift zur Herstellung eines Mischpfropfpolymers aus 2-Acrylamido-2-methylpropan-sulfonsäure und Acrylsäure (Ansatz 06PP066). Es wurden nur weitere Waschchritte mit 2x 0,5 M Schwefelsäure, 0,2 M Ascorbinsäure ergänzt.

### Beispiel 7:

### Vorschrift zur Kupplung von Benzylamin an ein Mischpfropfpolymers aus 2-Acrylamido-2-methylpropansulfonsäure und Acrylsäure (Ansatz 06PP262)

### Durchführung:

40 ml sedimentertes Mischpfropfpolymers aus 2-Acrylamido-2-methylpropansulfonsäure und Acrylsäure auf Fractogel (Ansatz 06PP189) werden auf einer Glasfilterfritte 8x mit jeweils 40 ml Wasser gewaschen und abgesaugt.

Das nutschfeuchte Gel wird in einer Glasapparatur mit Blattrührer in einer Lösung aus 12,8 g Benzylamin in 32 ml VE-Wasser und mit 32%iger Salzsäure auf pH 4,7 gestellt suspendiert. Nachdem der pH-Wert überprüft und eventuell nachgestellt worden ist, werden 0,8 g N-(3-Dimethylaminopropyl)-N'-ethylcarbodümid-hydrochlorid (EDC) zugegeben.

DieSuspensionwirdgerührt,dabeiwirdderpH-WertdurchZugabevon6%igerNatronlaugeaufpH4,7gehalten. Nach 3 Stunden werdenweitere 0,8 g EDC zugegeben. Der pH-Wertwird weiterhin durch Zugabe von 6%iger Natronlauge auf pH 4,7 gehalten und min. 1 Stunde überwacht.

Nachdem 17 Stunden gerührt worden ist, wird die Reaktionslösung über eine Glasfilterfritte (P2) abgesaugt und das Gel auf der Fritte mit jeweils 40 ml Waschlösung wie folgt gewaschen:
10x VE-Wasser
3x 1 M Natriumchloridlösung
5x 50 mM Phosphat-Puffer, pH 7,0
2x 20% Ethanol/150mM Natriumchlorid-Lösung

Die Lagerung erfolgt in 20%igem Ethanol/150 mM Natriumchlorid-Lösung bei Raumtemperatur.

### Beispiel 8:

### Vorschrift zur Kupplung von Benzylamin an ein Mischpfropfpolymers aus 2-Acrylamido-2-methylpropansulfonsäure und Acrylsäure (Ansatz 06PP345)

Durchführung siehe Vorschrift zur Kupplung von Benzylamin an ein Mischpfropfpolymers aus 2-Acrylamido-2-methylpropansulfonsäure und Acrylsäure (Ansatz 06PP262). Es wird jeweils 0,6 g N-(3-Dimethylaminopropyl)-N'-ethyl-carbodiimid-hydrochlorid (EDC) zugegeben.

### Beispiel 9:

### Vorschrift zur Kupplung von Benzylamin an ein Mischpfropfpolymers aus 2-Acrylamido-2-methylpropansulfonsäure und Acrylsäure (Ansatz 06PP346)

Durchführung siehe Vorschrift zur Kupplung von Benzylamin an ein Mischpfropfpolymers aus 2-Acrylamido-2-methylpropansulfonsäure und Acrylsäure (Ansatz 06PP262). Es wird jeweils 1,0 g N-(3-Dimethylaminopropyl)-N'-ethyl-carbodiimid-hydrochlorid (EDC) zugegeben.

### Beispiel 10:

### Vorschrift zur Herstellung eines Mischpfropfpolymers aus 2-Acrylamido-2-methylpropansulfonsäure und 4-Acrylamidobuttersäure (Ansatz 06SW055)

### Durchführung:

In einer Glasreaktionsapparatur mit einem Blattrührer wird eine Suspension aus 70 g nutschfeuchtem Fractogel TSK HW65 (M) (mit verdünnter Mineralsäure und VE-Wasser gewaschen) und einer Lösung aus 16,8 g 32%ige Natronlauge in 75 ml VE-Wasser, 13,3 g 2-Acrylamido-2-methylpropansulfonsäure (Zugabe unter Eiskühlung) und 17,7 g 4-Acrylamidobuttersäure hergestellt. Mit VE-Wasser wird auf 200 ml aufgefüllt und mit 65%iger Salpetersäure auf pH 3 gestellt.

Eine Starterlösung aus 6,2 g Ammoniumcer-IV-nitrat und 0,4 g 65%ige Salpetersäure in 25 ml VE-Wasser wird in einem Tropftrichter mit Druckausgleich vorgelegt. Die gesamte Apparatur wird durch wiederholtes (3x) Evakuieren und Entspannen mit Stickstoff inertisiert. Anschließend wird die Suspension in der Apparatur auf 55 °C erwärmt.

Zu der inertisierten Suspension wird bei einer Innentemperatur von 55 °C die Starterlösung unter Rühren zugegeben. Unter leichtem Stickstoffstrom wird die Suspension 3 Stunden bei 55 °C gerührt. Danach wird die Reaktionslösung über eine Glasfilterfritte (P2) abgesaugt und das Gel auf der Fritte mit jeweils 100 ml Waschlösung wie folgt gewaschen:
5x 0,5 M Schwefelsäure, 0,2 M Ascorbinsäure
3x VE-Wasser
4x 1 M Natronlauge
5x VE-Wasser
1x 50 mM Phosphat-Puffer pH 7,0
3x VE-Wasser
2x 20% Ethanol/150mM Natriumchlorid

Die Lagerung erfolgt in 20%igem Ethanol/150 mM Natriumchlorid-Lösung bei Raumtemperatur.

### Beispiel 11:

### Vorschrift zur Herstellung eines Pfropfpolymers aus 4-Acrylamidobuttersäure (Ansatz 05PP116)

### Durchführung:

In einer Glasreaktionsapparatur mit einem Blattrührer wird bei 0 - 5 °C zu einer Lösung von 20,6 g 4-Amino-buttersäure in 200 ml VE-Wasser 25,0 g 32%ige Natronlauge gegeben. Unter kräftigem Rühren wird darauf aus zwei Tropftrichtern 18,2 g Acrylsäurechlorid und 25,0 g 32%ige Natronlauge bei 0 - 5 °C gleichzeitig zudosiert. Darauf wird 45 Minuten bei Raumtemperatur nachgerührt. Die Monomer-Lösung wird mit 65% iger Salpetersäure auf pH 2 angesäuert.

70 g nutschfeuchtem Fractogel TSK HW65 (M) (mit verdünnter Mineralsäure und VE-Wasser gewaschen) wird in der Monomer-Lösung suspendiert. Mit VE-Wasser wird auf 450 ml aufgefüllt und mit 65%iger Salpetersäure auf pH 2 gestellt.

Eine Starterlösung aus 2,7 g Ammoniumcer-IV-nitrat und 1,0 g 65%ige Salpetersäure in 50 ml VE-Wasser wird in einem Tropftrichter mit Druckausgleich vorgelegt. Die gesamte Apparatur wird durch wiederholtes (3x) Evakuieren und Entspannen mit Stickstoff inertisiert. Anschließend wird die Suspension in der Apparatur auf 42 °C erwärmt.

Zu der inertisierten Suspension wird bei einer Innentemperatur von 42 °C die Starterlösung unter Rühren zugegeben. Unter leichtem Stickstoffstrom wird die Suspension 5 Stunden bei 42 °C und anschließend noch 17 Stunden bei Raumtemperatur gerührt. Danach wird die Reaktionslösung über eine Glasfilterfritte (P2) abgesaugt und das Gel auf der Fritte mit jeweils 200 ml Waschlösung wie folgt gewaschen:
5x VE-Wasser
8x 0,5 M Schwefelsäure, 0,2 M Ascorbinsäure
3x VE-Wasser
2x 1 M Natronlauge
2x VE-Wasser

Das Gel wird in 200 mL VE-Wasser suspendiert und mit 25%iger Salzsäure auf pH 7 eingestellt. Die Lagerung erfolgt in 20%igem Ethanol bei Raumtemperatur.

### Beispiel 12:

### Vorschrift zur Kupplung von Aminen an ein Mischpfropfpolymers aus 2-Acrylamido-2-methylpropansulfonsäure und Acrylsäure

### Durchführung:

20 ml sedimentertes Mischpfropfpolymers aus 2-Acrylamido-2-methylpropansulfonsäure und Acrylsäure auf Fractogel (Ansatz 06PP066 oder 05PP131) werden auf einer Glasfilterfritte 8x mit jeweils 20 ml Wasser gewaschen und abgesaugt.

Aminlösung: 5 - 60 mmol Amin werden in 20ml VE-Wasser (oder DMFNE-Wasser 3:1) gelöst und mit 32%iger Salzsäure auf pH 4,7 eingestellt (Tabelle 2).

EDC-Lösung: 2,4 g N-(3-Dimethylaminopropyl)-N'-ethylcarbodiimid-hydrochlorid (EDC) in 4,8 ml VE-Wasser lösen.

Das nutschfeuchte Gel wird in einem verschließbaren Becher in der Aminlösung suspendiert. Darauf werden 1,2 ml EDC-Lösung zugegeben und die Suspension wird bei Raumtemperatur geschüttelt. Nach 3 Stunden werden weitere 1,2 ml EDC-Lösung zugegeben und es wird noch 17 Stunden geschüttelt.

Die Reaktionslösung wird über eine Glasfilterfritte abgesaugt und das Gel auf der Fritte mit jeweils 20 ml Waschlösung wie folgt gewaschen:
(eventuell 5x DMF)
5x VE-Wasser
3x mit 1 M Natronlauge/Ethanol 2:8 (V/V)

Das Gel wird in 20 mL 1 M Natronlauge/Ethanol 2:8 suspendiert und 20 Stunden geschüttelt, nach Absaugen auf der Fritte wird das Gel mit jeweils 20 ml Waschlösung wie folgt weiter gewaschen:
2x 1 M Natronlauge/Ethanol 2:8
3x VE-Wasser
1x 50mM Phosphat-Puffer pH7,0
2x VE-Wasser
2x 20% Ethanol/150mM Natriumchlorid-Lösung

Die Lagerung erfolgt in 20%igem Ethanol/150 mM Natriumchlorid-Lösung bei Raumtemperatur.

### Beispiel 13:

### Vorschrift zur Kupplung von Benzylamin an ein Mischpfropfpolymers aus 2-Acrylamido-2-methylpropansulfonsäure und 4-Acrylamidobuttersäure (Ansatz 06SW058)

### Durchführung:

20 ml sedimentertes Mischpfropfpolymers aus 2-Acrylamido-2-methylpropansulfonsäure und 4-Acrylamidobuttersäure auf Fractogel (Ansatz 06SW055) werden auf einer Glasfilterfritte 5x mit jeweils 20 ml Wasser und 5x mit jeweils 20 ml 0,1 M 2-Morpholinoethansulfonsäure-Lösung (MES-Puffer) pH 4,7 gewaschen und abgesaugt.

6,4 g Benzylamin werden in 20ml 0,1 M MES-Puffer gelöst und mit 32%iger Salzsäure auf pH 4,7 eingestellt.

Das nutschfeuchte Gel wird in einem verschließbaren Becher in der Benzylaminlösung suspendiert. Darauf werden 0,4 g N-(3-Dimethylaminopropyl)-N'-ethylcarbodiimid-hydrochlorid (EDC) zugegeben und die Suspension wird bei Raumtemperatur geschüttelt. Nach 3 Stunden werden weitere 0,4 g EDC zugegeben und es wird noch 17 Stunden geschüttelt.

Die Reaktionslösung wird über eine Glasfilterfritte abgesaugt und das Gel auf der Fritte mit jeweils 20 ml Waschlösung wie folgt gewaschen:
10x VE-Wasser
3x 1 M Natriumchlorid-Lösung
5x 50mM Phosphat-Puffer pH7,0
2x VE-Wasser
2x 20% Ethanol/150mM Natriumchlorid-Lösung

Die Lagerung erfolgt in 20%igem Ethanol/150 mM Natriumchlorid-Lösung bei Raumtemperatur.

Die statische Bindungskapazität von polyclonalem human IgG (Gammanorm) bei 20 mM Phosphat, 75 mM Natriumchlorid, pH 6,5 beträgt 30,9 mg IgG/ml und bei 20 mM Phosphat, 150 mM Natriumchlorid, pH 6,5 9,1 mg IgG/ml. Die Methode zur Bestimmung der Bindungskapazität ist in Beispiel 15 beschrieben.

### Beispiel 14:

### Vorschrift zur Kupplung von Benzylamin an ein Pfropfpolymers aus 4-Acrylamidobuttersäure (Ansatz 05PP117/05PP118)

### Durchführung:

20 ml sedimentertes Pfropfpolymer aus 4-Acrylamidobuttersäure auf Fractogel (Ansatz 05PP116) werden auf einer Glasfilterfritte 5x mit jeweils 20 ml Wasser und 5x mit jeweils 20 ml 0,1 M 3-Morpholinopropansulfonsäure-Lösung (MPS-Puffer) pH 4,7 gewaschen und abgesaugt.

Variante A: 6,4 g Benzylamin werden in 20ml 0,1 M MPS-Puffer gelöst und mit 32%iger Salzsäure auf pH 4,7 eingestellt.

Das nutschfeuchte Gel wird in einem verschließbaren Becher in der Aminlösung suspendiert. Darauf werden 0,4 g N-(3-Dimethylaminopropyl)-N'-ethylcarbodiimid-hydrochlorid (EDC) zugegeben und die Suspension wird bei Raumtemperatur geschüttelt. Nach 3 Stunden werden weitere 0,4 g EDC zugegeben und es wird noch 17 Stunden geschüttelt.

Variante B: 1,1 g Benzylamin werden in 20ml 0,1 M MPS-Puffer gelöst und mit 32%iger Salzsäure auf pH 4,7 eingestellt.

Das nutschfeuchte Gel wird in einem verschließbaren Becher in der Aminlösung suspendiert Darauf werden 0,07 g N-(3-Dimethylaminopropyl)-N'-ethylcarbodiimid-hydrochlorid (EDC) zugegeben und die Suspension wird bei Raumtemperatur geschüttelt. Nach 3 Stunden werden weitere 0,07 g EDC zugegeben und es wird noch 17 Stunden geschüttelt.

Die Reaktionslösungen Variante A oder B werden über eine Glasfilterfritte abgesaugt und die Gele auf der Fritte mit jeweils 20 ml Waschlösung wie folgt gewaschen:
10x VE-Wasser
3x 1 M Natriumchlorid-Lösung
5x 50mM Phosphat-Puffer pH7,0

Die Lagerung erfolgt in 20%igem Ethanol/150 mM Natriumchlorid-Lösung bei Raumtemperatur.

Die statische Bindungskapazität von polyclonalem human IgG (Gammanorm) bei 20 mM Phosphat, 75 mM Natriumchlorid, pH 6,5 beträgt beträgt bei Gel Variante A 7,6 mg IgG/ml und bei Gel Variante B 16,8 mg IgG/ml. Die Methode zur Bestimmung der Bindungskapazität ist in Beispiel 15 beschrieben.

### Beispiel 15:

### Bestimmung der statitschen IgG Bindungskapazität (Mikrotiterplattenformat)

Alle Gelsuspensionen wurden mit 20% Ethanol in Wasser auf ein Gelsedimentvolumen von 50% eingestellt. Eine Filterplatte wird mit Bindepuffer und mit je 20 µl der homogenisierten Gelsuspension befüllt. Darauf wird die Filterplatte auf einer Vakuumstation absaugt.

Eine Deepwell-Platte wird mit Bindepuffer befüllt, mit IgG-Stammlösung (polyclonales human IgG Gammanorm, Fa. Octapharma) versetzt und gemischt.

200 µl IgG-Lösung zum Gel in der Filterplatte geben und auf einem Schüttler 15 min schütteln. Die Filterplatte wird auf der Vakuumstation abgesaugt. Es wird zweimal mit je 100 µl Bindepuffer gewaschen und abgesaugt. Darauf werden je 200 µL Elutionspuffer (20 mM Phosphat, 1 M Natriumchlorid, pH 7) in die Filterplatte gegeben und 5 min geschüttelt. Der Überstand wird auf der Vakuumstation in eine UV-Platte gesaugt, die bei 280 nm im Photometer vermessen wird.

Die aus dem Eluat berechneten IgG Bindungskapazitäten pro 1 ml Gelsedimentvolumen (IgG SBC) sind in Tabelle 2 aufgelistet. Als Bindungspuffer wurden 20 mM Phosphat, 75 mM Natriumchlorid, pH 6,5 und 20 mM Phosphat, 150 mM Natriumchlorid, pH 6,5 verwendet.

Die Bindungskapazitäten der Trennmaterialien aus Beispiel 12 sind in Tabelle 2 zusammengestellt.

### Beispiel 16:

### Bestimmung der chemischen Zusammensetzung der Pfropfpolymere

Aus den Pfropfpolymeren, bei denen es sich um Polyacrylamidketten handelt, können die funktionellen Gruppen durch saure Hydrolyse abgespalten werden. Die funktionellen Gruppen werden als Amin freigesetzt und können nach Derivatisierung mit ortho-Phthaldialdehyd und Mercaptoethanol mit der HPLC quantitativ analysiert werden. Zur Kalibration werden die käuflichen Amine verwendet oder das in der Synthese verwendete Monomer, das dann wie das Pfropfpolymer hydrolisiert werden muß.

10 mg trockenes Gel werden mit 1000 µl 5 M Salzsäure versetzt, im Ultraschallbad beschallt und anschließend in einem 1 ml Druckbehälter 10 Stunden bei 125 °C erhitzt.

Der Druckbehälter wird nach Abkühlen auf Raumtemperatur geöffnet und ca. 200 µl Überstand werden abpipettiert und 5 min zentrifugiert (8000 Upm).

40 µl des klaren Überstandes werden mit 176 µl 1 M Natronlauge neutralisiert und mit 325 µl 0,5 M Boratpuffer pH 9,5 und 119 µl Acetonitril/Wasser 8:2 (V/V) versetzt und gemischt. Darauf wird 100 µl OPA-Reagenz, das aus 100 mg ortho-Phthaldialdehyd, 9 ml Methanol, 1 ml 0,5 M Boratpuffer pH 9,5 und 100 µl Mercaptoethanol hergestellt wird, zugesetzt und kräftig geschüttelt. Nach 2 Minuten Reaktionszeit wird die Probe mit einer HPLC analysiert (UV-Detektion 330 nm).

Die Anzahl der geladenen Gruppen wird durch Titration bestimmt. Dazu wird das Gel mit 0,5 M Salzsäure geschüttelt und mit 0,001 M Salzsäure gewaschen. Das so beladene Gel wird mit 0,1 M Natronlauge titriert. Das Gel wird anschließend gewaschen und getrocknet. Die Bestimmung der Äquivalenzpunkte erfolgt durch Bildung der ersten Ableitung.

Die Ergebnisse sind in Tabelle 4 aufgelistet.

### Beispiel 17:

### Bestimmung der dynamischen IgG Bindungskapazität

Es wurden Säulen mit 1 ml Inhalt gepackt Proteo-Cart-Säulen mit 19 mm und 20 % bzw. Superformance-Säulen mit 13 mm Bedhöhe und 10% Kompression. Die Säule wurden miteiner IgG-Lösung mit einem Gehalt von 1 g/l in Puffer A (hergestellt aus polyclonalem human IgG Gammanorm, Fa. Octapharma) bis zu einem Durchbruch von 10% beladen. Dabei wurde die Flussrate so gewählt, dass die Kontaktzeit auf der Säule 4 min beträgt. Nachdem mit Puffer A nachgespült worden war, wurde mit Puffer B eluiert.
Puffer A: 25 mM Phosphat, 150 mM Natriumchlorid, pH 6,5
Puffer B: 25 mM Phosphat, 1 M Natriumchlorid, pH 6,5 oder
Puffer A': 25 mM Phosphat, 150 mM Natriumchlorid, pH 5,5
Puffer B': 25 mM Phosphat, 1 M Natriumchlorid, pH 5,5
   oder
Puffer A": 25 mM Phosphat, 150 mM Natriumchlorid, pH 5,5
Puffer B": 50 mM TRIS-Puffer, 2 M Natriumchlorid, pH 9,0

Die Ergebnisse sind in Tabelle 4 aufgelistet.

### Beispiel 18:

### Bindungsexperiment mit monoklonalem Antikörper

Eine 1 ml Inhalt Proteo-Cart-Säule (Merck KgaA) wird mit einem Trennmaterial (06PP343), hergestellt nach Beispiel 7 gepackt (17% Kompression) und mit 25 mM Phosphat, 150 mM Natriumchlorid, pH 5,5 (ca. 12 mS/cm) equilibriert. Eine Probe mit 20 mg chimärem, monoclonalem Antikörper (wie beschrieben in Clinical Cancer Research 1995, 1, 1311-1318, gelöst in 25 mM Phosphat, 150 mM Natriumchlorid, pH 5,5) wird bei einer Flussrate von 0,2 ml/min auf die Säule aufgebracht. Die Elution erfolgt mit einer Lösung, enthaltend 25 mM Phosphat, 1 M Natriumchlorid bei einem pH 5,5. Die anschließende Wiederfindung des Antikörpers nach erfolgter Elution betrug in den durchgeführten Versuchen 98%.

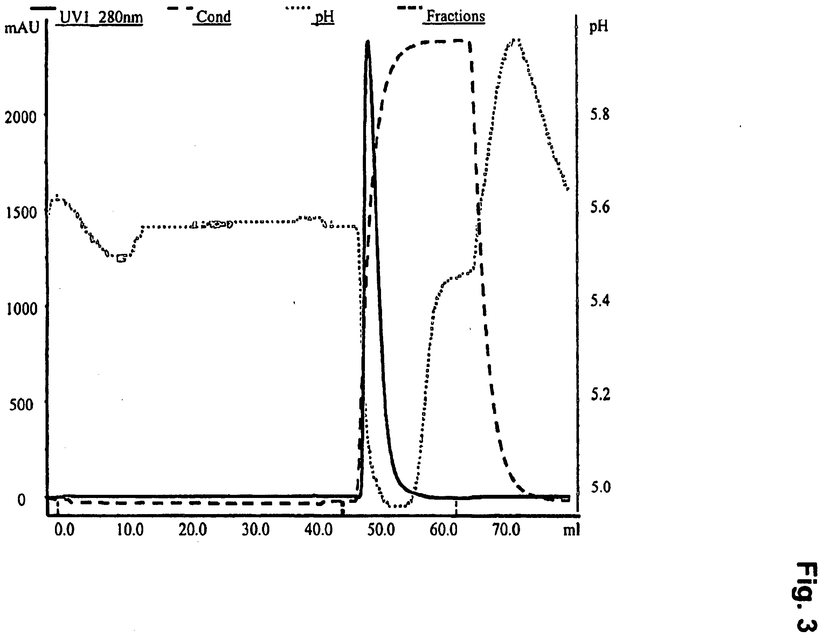

Das Chromatogramm wird in Abbildung 3 gezeigt.

### Beispiel 19:

### Größenausschlußchromatographie

Die Verteilunskoeffizienten Kd von Pullulanen mit unterschiedlichen Molekulargewichten, in Abbildung 2 dargestellt durch ihren Viskositätsradius, wurde durch isokratische Experimente bei drei Salzkonzentrationen (0, 0,1 und 1,0 M Natriumchlorid) für ein Pfropfpolymer aus Acrylamido-2-methylpropansulfonsäure und Acrylsäure vor (Fractogel SO3/COO und nach der Kupplung von Benzylamin (Fractogel SO3/COO/Benzyl experimentell bestimmt.

**Tabelle 2: Kupplung von Aminen an ein Mischpfropfpolymer aus 2-Acrylamido-2-methylpropansulfonsäure und Acrylsäure, statische Bindungskapazität (SB) von polyclonalem human IgG (Gammanorm) bei pH 6,5 und 75 bzw 150 mM Natriumchlorid pro ml Gelsediment.**

| Ansatz | Vorstufe | Lösungsmittel | Amin mmol | Amin(e) (Verhältnis) | SB 75 mM NaCl mg IgG/ml | SB 150 mM NaCl mg IgG/ml |
|---|---|---|---|---|---|---|
| SO3^{[1]} | entfällt | | | | 6,4 | 0,3 |
| COO^{[2]} | entfällt | | | | 1,2 | 0,2 |
| 05PP131^{[3]} | entfällt | | | | 1,5 | 0,3 |
| 05PP157 | 05PP131 | Wasser | 10 | 4-Methoxybenzylamin | 16,6 | nicht bestimmt |
| 05PP143 | 05PP131 | Wasser | 60 | Phenoxyethylamin | 17,4 | nicht bestimmt |
| 05PP158 | 05PP131 | Wasser | 10 | 4-Fluorbenzylamin | 17,4 | nicht bestimmt |
| 06PP069 | 06PP066 | DMF/Wasser | 60 | Octylamin | 20,2 | 5.2 |
| 05PP152 | 05PP131 | Wasser | 5 | Phenacylamin Hydrochlorid | 23,4 | nicht bestimmt |
| 05PP151 | 05PP131 | Wasser | 30 | Anilin | 26,5 | nicht bestimmt |
| 06PP080 | 06PP066 | DMF/Wasser | 60 | Napthylmethylamin | 27,9 | 11,4 |
| 06PP054 | 06PP066 | Wasser | 60 | Benzylamin/Tyramin (90:10) | 28,1 | 12,5 |
| 05PP132 | 05PP131 | Wasser | 60 | Benzylamin | 30,2 | nicht bestimmt |
| 06PP051 | 06PP066 | Wasser | 60 | Benzylamin/ Ethanolamin (90:10) | 32,7 | 12,9 |
| 06PP119 | 06PP066 | Wasser | 60 | Benzylamin | 37,9 | 20,4 |
| 06PP118 | 06PP066 | DMF/Wasser | 60 | Tryptamin | 42,3 | 25,4 |
| 06PP086 | 06PP066 | Wasser | 60 | Phenylethylamin | 45,5 | 18,1 |
| [1] kommerziell erhältliches Fractogel^{®} EMD SO₃⁻ (M), | | | | | | |
| [2] kommerziell erhältliches Fractogel^{®} EMD COO⁻ (M), | | | | | | |
| [3] Mischpfropfpolymer vor Kupplungsreaktion mit hydrophobem Amin. | | | | | | |

**Tabelle 3: Dynamische Bindungskapazität (DB) von polyclonalem human IgG (Gammanorm) bei 150 mM Natriumchlorid und pH 5,5 bzw. pH 6,5 pro ml gepacktes Gel und chemische Zusammensetzung der Pfropfpolymere.**

| Ansatz | DB pH 6,5 mg | DB^{[1]} pH 5,5 (Wiederfindung) | DB^{[2]} pH 5,5 (Wiederfindung) | SO3-Gruppen | Benzyl-Gruppen | geladene Gruppen (Titration) |
|---|---|---|---|---|---|---|
| | IgG/ml | mg IgG/ml | mg IgG/ml | µmol/g | µmol/g | µmol/g |
| Fractogel^{®} | 1,1 | 0,4 (n.b.) | n.b. | | | |
| EMD SO₃⁻ (M) | | | | | | |
| Fractogel^{®} EMD COO-(M) | 0,5 | 0,6 (n.b.) | n.b. | | | |
| 05SW136 | 1,4 | 28,0 (96%) | n.b. | 240 | 422 | 393 |
| 06SW297 | 0,9 | 42,9 (83%) | 50,5 (96%) | | 122 | 2016 |
| 06SW085 | n.b. | 34,7 (93%) | 36,9 (98%) | 107 | 187 | 497 |
| 06PP262 | 1,2 | 68,1 (82%) | 76,1 (93%) | 521 | 467 | 1366^{[3]} |
| 06PP345 | 0,5 | 15,7 (85%) | 22,7 (100%) | 657 | 353 | 1480^{[3]} |
| 06PP346 | 1,3 | 61,2 (77%) | 67,4 (89%) | 582 | 530 | 1303^{[3]} |
| [1] Elution mit Puffer B' bei pH 5,5 | | | | | | |
| [2] Elution mit Puffer B" bei pH 9,0 | | | | | | |
| [3] berechnet aus dem Titrationsergebnis der Vorstufe (06PP189 mit 1833 µmol/g bzw. 06PP292 mit 1963 µmol/g) und der Benzylgruppendichte | | | | | | |
| n.b. nicht bestimmt | | | | | | |

## Patentansprüche

1. Verwendung von Trennmaterialien für die Ionenaustauschchromatographie in einer Ionenaustauschchromatographiesäule, wobei besagte Trennmaterialien für die Ionenaustauschchromatographie auf der Grundlage von organischen, hydroxylgruppenhaltigen Polymerbasisträgern an der Oberfläche der Basisträger kovalent gebundene Mischpolymere aufweisen und die Trennmaterialien dadurch charakterisiert sind, dass
a) der Basisträger aliphatische Hydroxylgruppen enthält,
b) die kovalent gebundenen Mischpolymeren über eine endständige Monomereinheit an den Träger gebunden sind,
c) die Mischpolymeren mindestens zwei verschiedene Monomereinheiten enthalten,
d) die Monomereinheiten linear verknüpft sind,
e) das Mischpolymer mindestens eine Monomereinheit, die eine negative Ladung in Form einer Sulfonsäure oder Carbonsäure trägt und daneben Ester- oder Amidgruppen und Alkyl- und/oder Alkylengruppen und insgesamt maximal 8 C-Atome aber keine Arylgruppen enthält,
oder
die eine negative Ladung in Form einer Sulfonsäure oder
Carbonsäure trägt und daneben Alkyl- und/ oder Alkylengruppen aber keine Arylgruppen enthält,
f) das Mischpolymer mindestens eine Monomereinheit, die als hydrophobe Gruppe ein geradkettiges oder verzweigtes Alkyl mit bis zu 4 bis 18 C-Atomen oder entsprechende Arylgruppen trägt und Ester- oder Amidgruppen enthält
und
g) das Verhältnis der Monomereinheiten mit negativer Ladung zu den Monomereinheiten mit hydrophober Gruppe in einem Bereich von 99 : 1 bis 10 : 90 liegt.

2. Trennmaterialien für die Ionenaustauschchromatographie auf der Grundlage von organischen hydroxylgruppenhaltigen Polymerbasisträgern, auf deren Oberflächen Mischpolymere kovalent gebunden sind, **dadurch gekennzeichnet, dass**
a) der Basisträger aliphatische Hydroxylgruppen enthält,
b) die kovalent gebundenen Mischpolymeren über eine endständige Monomereinheit an den Träger gebunden sind,
c) die Mischpolymeren mindestens zwei verschiedene Monomereinheiten enthalten,
d) die Monomereinheiten linear verknüpft sind,
e) das Mischpolymer mindestens eine Monomereinheit, die eine negative Ladung in Form einer Sulfonsäure oder Carbonsäure aufweist und zusätzlich Ester- oder Amidgruppen und Alkyl- und/oder Alkylengruppen und insgesamt maximal 8 C-Atome aber keine Arylgruppen enthält, oder
die eine negative Ladung in Form einer Sulfonsäure oder Carbonsäure trägt und daneben Alkyl- und/oder Alkylengruppen aber keine Arylgruppen enthält,
wobei
das Mischpolymer mindestens eine Monomereinheit mit negativer Ladung entweder der allgemeinen Formel (1) 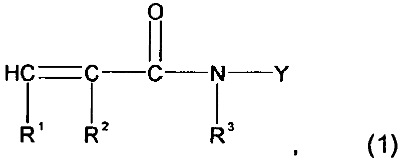 worin
R¹, R² und Y unabhängig voneinander H oder CH₃,
R³ R⁴-SO₃M oder R⁴-COOM,
R⁴ geradkettiges oder verzweigtes Alkylen mit 2 bis 4-C-Atomen
und
M H, Na, K oder NH₄
bedeuten
oder der allgemeinen Formel (2) aufweist, 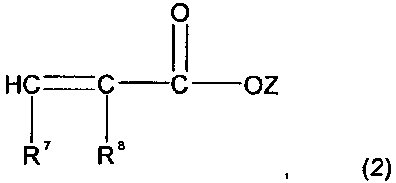 worin
R⁷ und R⁸ unabhängig voneinander
H oder CH₃ oder
R⁷ COOM, wenn Z = M und R⁸ = H,
Z entweder M, R⁴-COOM oder R⁴-SO₃M mit
R⁴ geradkettiges oder verzweigtes Alkylen mit 2 bis 4 C-Atomen,
und
M H, Na, K oder NH₄
bedeuten,
oder mindestens jeweils eine Monomereinheit der allgemeinen Formel (1) und der allgemeinen Formel (2) aufweist
und
f) das Mischpolymer mindestens eine Monomereinheit, die als hydrophobe Gruppe ein geradkettiges oder verzweigtes Alkyl mit 4 bis 18 C-Atomen oder entsprechende Arylgruppen aufweist und Amidgruppen enthält,
wobei
das Mischpolymer mindestens eine Monomereinheit der allgemeinen Formel (1) enthält, die eine hydrophobe Gruppe aufweist, welche dem Mischpolymer einen hydrophoben Charakter verleiht 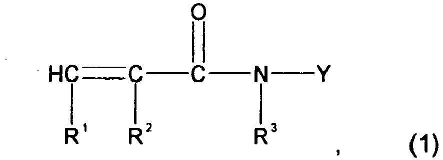 worin
R¹ H oder COOM,
R² H oder CH₃,
Y und R³ geradkettiges oder verzweigtes Alkyl mit bis zu 18 C-Atomen,
worin Y und R³ zusammen mindestens 6-C-Atome tragen,
oder
Y H
und
R³ geradkettiges oder verzweigtes Alkyl mit 6 bis 18 C-Atomen, oder
Y H
und
R³ Aryl oder R⁶ Aryl
oder
Y H oder CH₃
und
R³ R⁴-CONHX,
X geradkettiges oder verzweigtes Alkyl mit 6 bis 18 C-Atomen, Aryl oder R⁶-Aryl
R⁴ geradkettiges oder verzweigtes Alkylen mit 2 bis 4 C-Atomen,
R⁶ ein geradkettiges oder verzweigtes Alkylen mit 1 bis 4 C-Atomen, worin eine Methylengruppe durch O ersetzt sein kann und mit COOM substituiert sein kann
und
M H, Na, K oder NH₄
bedeuten
und
g) das Verhältnis der Monomereinheiten mit negativer Ladung zu den Monomereinheiten mit hydrophober Gruppe in einem Bereich 99 : 1 bis 10 : 90 liegt.

3. Trennmaterialien gemäß Anspruch 2, **dadurch gekennzeichnet, dass**
c) die Mischpolymeren mindestens zwei verschiedene Monomereinheiten enthalten,
e) das Mischpolymer mindestens eine Monomereinheit mit negativer Ladung aus der Reihe 2-Acrylamido-2-methylpropansulfonsäure, 2-Acrylamidoethansulfonsäure, Carboxymethylacrylamid, Carboxyethylacrylamid, Carboxypropylacrylamid, Carboxymethlymethacrylamid, Carboxyethlymethacrylamid, Carboxypropylmethacrylamid, Maleinsäure, Acrylsäure und Methacrylsäure aufweist und
f) das Mischpolymer mindestens eine Monomereinheit der allgemeinen Formel (1) mit einer hydrophoben Gruppe aufweist 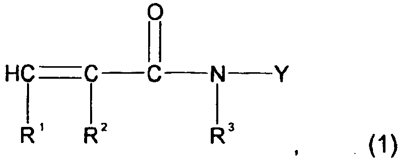 worin
R¹ H,
R² H oder CH₃
Y H
und
R³ aryl oder R⁶-aryl,
or
Y H oder CH₃
und
R³ R⁴-CONHX, wobei
X aryl oder R⁶-aryl,
R⁴ Methylen, Ethylen, Propylen und
R⁶ ein geradkettiges oder verzweigtes Alkylen mit 1 bis 4 C-Atomen, worin eine Methylengruppe durch O ersetzt sein kann und mit COOM substituiert sein kann
und
M H, Na, K oder Ammonium
bedeuten.

4. Trennmaterialien nach Ansprüchen 2 oder 3, **dadurch gekennzeichnet dass**
c) die Mischpolymeren mindestens zwei verschiedene Monomereinheiten enthalten,
e) das Mischpolymer mindestens eine Monomereinheit mit negativer Ladung aus der Reihe 2-Acrylamido-2-methylpropansulfonsäure, 2-Acrylamidoethansulfonsäure, Carboxymethylacrylamid, Carboxyethylacrylamid, Carboxypropylacrylamid, Carboxymethlymethacrylamid, Carboxyethlymethacrylamid, Carboxypropylmethacrylamid, Maleinsäure, Acrylsäure und Methacrylsäure aufweist und
f) das Mischpolymer mindestens eine Monomereinheit mit hydrophober Gruppe der allgemeinen Formel (1) aufweist, 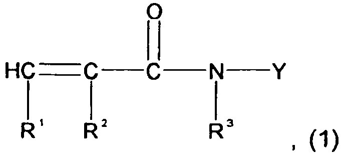 worin
R¹ H,
R² H oder CH₃,
Y H
und
R³ Phenyl, Benzyl, Phenylethyl oder Phenoxyethyl bedeuten,
oder
Y H oder CH₃
und
R³ R⁴-CONHX mit
X Phenyl, Benzyl, oder Phenylethyl,
und
R⁴ Methylen, Ethylen, Propylen, Acryloylphenylglycin oder Acryloylphenylalanin
bedeuten.

5. Trennmaterial nach einem oder mehreren der Ansprüche 2 - 4 **dadurch gekennzeichnet, dass**
a) das Mischpolymer als Monomereinheit mit negativer Ladung 2-Acrylamido-2-methylpropansulfonsäure oder/und 2-Acrylamidoethansulfonsäure enthält,
b) das Verhältnis der Monomereinheiten mit negativer Ladung zu den Monomereinheiten mit hydrophober Phenyl, Benzoyl oder Phenylethyl Gruppe ist in einem Bereich zwischen 70 : 30 bis 30 : 70 liegt.

6. Trennmaterial nach einem oder mehreren der Ansprüche 2 - 4 **dadurch gekennzeichnet, dass**
a) das Mischpolymer als Monomereinheit mit negativer Ladung Acrylsäure oder/und Methacrylsäure enthält, und
b) das molare Verhältnis der Monomereinheiten mit negativer Ladung zu den Monomereinheiten mit hydrophober Phenyl, Benzyl oder Phenylethyl Gruppe in einem Bereich zwischen 95 : 5 bis 70 : 30 liegt.

7. Trennmaterial nach einem oder mehreren der Ansprüche 2 - 4 **dadurch gekennzeichnet, dass**
a) das Mischpolymer als Monomereinheit mit negativer Ladung ein Monomer aus der Reihe 2-Acrylamido-2-methylpropansulfönsäure und 2-Acrylamidoethansulfonsäure und
b) ein Monomer aus der Reihe Acrylsäure und Methacrylsäure enthält und
c) das molare Verhältnis der Monomereinheiten mit negativer Ladung zu den Monomereinheiten mit hydrophoben Phenyl, Benzyl oder Phenylethyl Gruppe in einem Bereich zwischen 95:5 bis 30:70 liegt.

8. Verfahren zur Herstellung von Trennmaterialien gemäß einem oder mehreren der Ansprüche 2 - 7, **dadurch gekennzeichnet, dass** mindestens eine Monomereinheit mit einer funktionellen Gruppe mit negativer Ladung mit mindestens einer Monomereinheit mit einer hydrophoben Gruppe, und gegebenenfalls mit einem neutralen Monomer mit hydrophilen Eigenschaften in einer ein- oder mehrstufigen Reaktion auf ein hydroxylgruppenhaltiges organisches Polymer als Trägermaterial pfropfpolymerisiert wird.

9. Verfahren gemäß Anspruch 8, **dadurch gekennzeichnet, dass** mindestens eine Monomereinheit mit einer funktionellen Gruppe mit negativer Ladung mit mindestens einer Monomereinheit mit einer hydrophoben Gruppe, und gegebenenfalls mit einem neutralen Monomer mit hydrophilen Eigenschaften, in verdünnter Säure unter Zusatz eines Cosolvenzes aus der Reihe Aceton, Dimethylacetamid, Dimethylformamid, Dioxan, Tetrahydrofuran in Gegenwart von Cer(IV)-ionen in Lösung gebracht werden und auf einen hydroxylgruppenhaltigen Basisträger pfropfpolymerisiert wird.

10. Verfahren zur Herstellung von Trennmaterialien gemäß der Ansprüche 8 oder 9, **dadurch gekennzeichnet, dass**
a) mindestens ein Monomer mit Carboxygruppe der allgemeinen Formel (1), 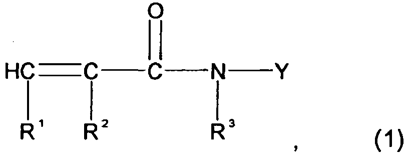 worin
R¹, R² und Y unabhängig voneinander H oder CH₃,
R³ R⁴-COOM
und
R⁴ geradkettiges oder verzweigtes Alkylen mit 2 bis 4 C-Atomen und
M H, Na, K oder NH₄
bedeuten,
und/oder ein Monomer mit Carboxygruppe der allgemeinen Formel (2), 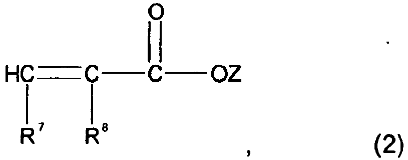 worin
R⁷ und R⁸ unabhängig voneinander
H oder CH₃, oder
R⁷ COOM, wenn Z = M und R⁸ =H,
Z entweder M oder R⁴-COOM mit
R⁴ geradkettiges oder verzweigtes Alkylen mit 2 bis 4 C-Atomen,
und
M H, Na, K oder NH₄
bedeuten,
gegebenenfalls mit einem wasserlöslichen Monomer zusammen auf einen hydroxylgruppenhaltigen organischen Polymer als Trägermaterial pfropfpolymerisiert wird, und
b) anschließend ein Teil der pfropfpolymerisierten Carboxygruppen durch Kupplung mit einem Amin zu Amidgruppen umgesetzt wird.

11. Verfahren nach Anspruch 10 zur Herstellung von Trennmaterialien gemäß einem oder mehreren der Ansprüche 2 - 7, **dadurch gekennzeichnet, dass**
a) mindestens ein Monomer mit Carboxygruppe der allgemeinen Formel (1), 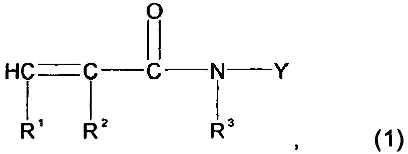 worin
R¹, R² und Y unabhängig voneinander H oder CH₃,
R³ R⁴-COOM,
R⁴ geradkettiges oder verzweigtes Alkylen mit 2 bis 4 C-Atomen und
M H, Na, K oder NH₄
bedeuten,
und/oder der allgemeinen Formel (2), 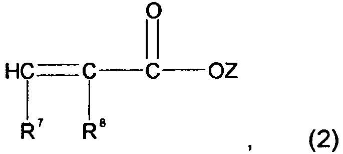 worin
R⁷ und R⁸ unabhängig voneinander H oder CH₃,
oder
R⁷ COOM, wenn Z = M und R⁸ = H
Z M oder R⁴-COOM
R⁴ geradkettiges oder verzweigtes Alkylen mit 2 bis 4 C-Atomen,
und
M H, Na, K oder NH₄
bedeuten,
gegebenenfalls mit einem weiteren wasserlöslichen Monomer zusammen, in Wasser gelöst wird, so dass der Anteil der negativ geladenen Gruppen 1 bis 100 mol% im Verhältnis zur Gesamtmonomermenge beträgt,
b) die erhaltene Lösung mit dem Trägermaterial derart vermischt wird, dass 0,05 bis 100 mol Gesamtmonomer je Liter sedimentiertes Trägermaterial eingesetzt werden,
c) zu der erhaltenen Suspension in Mineralsäure gelöstes Cer(IV)-salz hinzugefügt wird, wodurch sich ein pH-Wert im Bereich von 0 - 5 einstellt, und eine Cer(IV)-Konzentration von 0,00001 - 0,5 mol/L, bevorzugt 0,001 - 0,1 mol/L, und
d) das Reaktionsgemisch innerhalb von einer Zeit von 0,5 bis 72 Stunden pfropfpolymerisiert wird und
e) zur Modifizierung der pfropfpolymerisierten Carboxygruppen durch Kupplung ein Amin oder eine Amingemisch eingesetzt wird, und
f) dass die Gesamtaminmenge in einem molaren Verhältnis von 0,01 bis 100 : 1 zu den auf dem Träger gebundenen Carboxygruppen eingesetzt wird und in Gegenwart eines Kupplungsreagenzes, welches in einem molaren Verhältnis von 0,01 : 1 bis 20 : 1 zu den auf dem Träger gebundenen geladenen Gruppen eingesetzt wird, zu Amidgruppen umgesetzt wird, und
g) für die Kupplung ein Alkyl-, Aryl- oder Arylalkylamin mit 6 bis 18 C-Atomen aus der Gruppe Anilin, Benzylamin, 4-Fluorbenzylamin, 4-Methoxybenzylamin, Napthylmethylamin, Phenacylamin, Phenylethyl-amin, Phenoxyethylamin, Tryptamin oder Tyramin als freies Amin oder als Hydrochlorid eingesetzt wird.

12. Ionenaustauschchromatographiesäule, aufweisend ein Trennmaterial gemäß einem oder mehreren der Ansprüche 2 - 7.

13. Verwendung der Trennmaterialien nach einem oder mehreren der Ansprüche 2 - 7 in einer Ionenaustauschchromatographiesäule.

14. Verwendung der Trennmaterialien nach einem oder mehreren der Ansprüche 2 - 7 zur Abtrennung von Biopolymeren aus flüssigen Medien.

15. Verwendung gemäß Anspruch 13, **dadurch gekennzeichnet, dass** das Biopolymer in einer wässerigen Flüssigkeit gelöst ist, die eine elektrolytische Leitfähigkeit von 1 bis 20 mS/cm und einen pH Wert von größer 4 hat.

16. Verwendung nach einem oder mehreren der Ansprüche 13 bis 15, **dadurch gekennzeichnet, dass** das durch Wechselwirkung mit den ionischen und hydrophoben Gruppen an das Trennmaterial gebundene Biopolymer entweder durch
a) Erhöhen der Ionenstärke und/oder
b) durch Änderung des pHs
in der Lösung
und/oder
c) durch Einsatz eines Eluenten mit anderer Polarität als der des
Adsorptionspuffers
desorbiert wird.

## Claims

1. Use of separating materials for ion exchange chromatography in an ion exchange chromatography column, where said separating materials for ion exchange chromatography based on organic, hydroxyl-containing polymer base supports have covalently bonded copolymers on the surface of the base supports and the separating materials are **characterised in that**
a) the base support contains aliphatic hydroxyl groups,
b) the covalently bonded copolymers are bonded to the support via a terminal monomer unit,
c) the copolymers contain at least two different monomer units,
d) the monomer units are linked in a linear manner,
e) the copolymer contains at least one monomer unit which carries a negative charge in the form of a sulfonic acid or carboxylic acid and in addition contains ester or amide groups and alkyl and/or alkylene groups and in total a maximum of 8 C atoms, but no aryl groups,
or
which carries a negative charge in the form of a sulfonic acid or carboxylic acid and in addition contains alkyl and/or alkylene groups, but no aryl groups,
f) the copolymer contains at least one monomer unit which carries, as hydrophobic group, a straight-chain or branched alkyl having up to 4 to 18 C atoms or corresponding aryl groups and contains ester or amide groups
and
g) the ratio of the monomer units having a negative charge to the monomer units containing a hydrophobic group is in a range from 99 : 1 to 10 : 90.

2. Separating materials for ion exchange chromatography based on organic, hydroxyl-containing polymer base supports to the surfaces of which copolymers are covalently bonded, **characterised in that**
a) the base support contains aliphatic hydroxyl groups,
b) the covalently bonded copolymers are bonded to the support via a terminal monomer unit,
c) the copolymers contain at least two different monomer units,
d) the monomer units are linked in a linear manner,
e) the copolymer contains at least one monomer unit which has a negative charge in the form of a sulfonic acid or carboxylic acid and additionally contains ester or amide groups and alkyl and/or alkylene groups and in total a maximum of 8 C atoms, but no aryl groups,
or
which carries a negative charge in the form of a sulfonic acid or carboxylic acid and in addition contains alkyl and/or alkylene groups, but no aryl groups,
where
the copolymer has at least one monomer unit having a negative charge, either of the general formula (1), 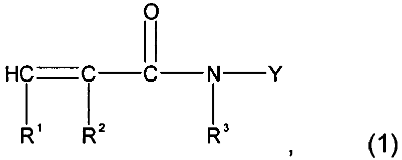 in which
R¹, R² and Y, independently of one another,
denote H or CH₃,
R³ denotes R⁴-SO₃M or R⁴-COOM,
R⁴ denotes straight-chain or branched alkylene having 2 to 4 C atoms
and
M denotes H, Na, K or NH₄,
or of the general formula (2), 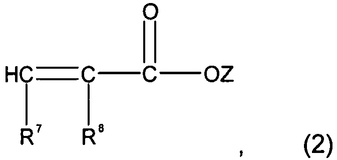 in which
R⁷ and R⁸, independently of one another,
denote H or CH₃ or
R⁷ denotes COOM if Z = M and R⁸ = H,
Z denotes either M, R⁴-COOM or R⁴-SO₃M, where
R⁴ denotes straight-chain or branched alkylene having 2 to 4 C atoms,
and
M denotes H, Na, K or NH₄,
or at least in each case one monomer unit of the general formula (1) and of the general formula (2)
and
f) the copolymer contains at least one monomer unit which has, as hydrophobic group, a straight-chain or branched alkyl having 4 to 18 C atoms or corresponding aryl groups and contains amide groups,
where
the copolymer contains at least one monomer unit of the general formula (1) which has a hydrophobic group which imparts a hydrophobic character on the copolymer, 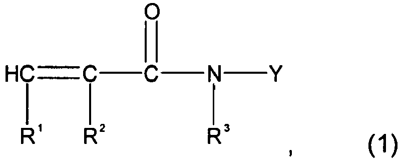 in which
R¹ denotes H or COOM,
R² denotes H or CH₃,
Y and R³ denote straight-chain or branched alkyl having up to 18 C atoms,
in which Y and R³ together carry at least 6 C atoms,
or
Y denotes H
and
R³ denotes straight-chain or branched alkyl having 6 to 18 C atoms, or
Y denotes H
and
R³ denotes aryl or R⁶-aryl
or
Y denotes H or CH₃
and
R³ denotes R⁴-CONHX,
X denotes straight-chain or branched alkyl having 6 to 18 C atoms, aryl or R⁶-aryl
R⁴ denotes straight-chain or branched alkylene having 2 to 4 C atoms,
R⁶ denotes a straight-chain or branched alkylene having 1 to 4 C atoms, in which a methylene group may be replaced by O and may be substituted by COOM
and
M denotes H, Na, K or NH₄
and
g) the ratio of the monomer units having a negative charge to the monomer units containing a hydrophobic group is in a range 99 : 1 to 10 : 90.

3. Separating materials according to Claim 2, **characterised in that**
c) the copolymers contain at least two different monomer units,
e) the copolymer has at least one monomer unit having a negative charge from the series 2-acrylamido-2-methylpropanesulfonic acid, 2-acrylamidoethanesulfonic acid, carboxymethylacrylamide, carboxyethylacrylamide, carboxypropylacrylamide, carboxymethylmethacrylamide, carboxyethylmethacrylamide, carboxypropylmethacrylamide, maleic acid, acrylic acid and methacrylic acid and
f) the copolymer has at least one monomer unit containing a hydrophobic group, of the general formula (1), 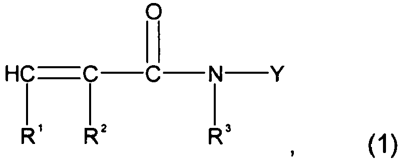 in which
R¹ denotes H,
R² denotes H or CH₃,
Y denotes H
and
R³ denotes aryl or R⁶-aryl,
or
Y denotes H or CH₃
and
R³ denotes R⁴-CONHX, where
X denotes aryl or R⁶-aryl,
R⁴ denotes methylene, ethylene, propylene and
R⁶ denotes a straight-chain or branched alkylene having 1 to 4 C atoms, in which a methylene group may be replaced by O and may be substituted by COOM
and
M denotes H, Na, K or ammonium.

4. Separating materials according to Claim 2 or 3, **characterised in that**
c) the copolymers contain at least two different monomer units,
e) the copolymer has at least one monomer unit having a negative charge from the series 2-acrylamido-2-methylpropanesulfonic acid, 2-acrylamidoethanesulfonic acid, carboxymethylacrylamide, carboxyethylacrylamide, carboxypropylacrylamide, carboxymethylmethacrylamide, carboxyethylmethacrylamide, carboxypropylmethacrylamide, maleic acid, acrylic acid and methacrylic acid and
f) the copolymer has at least one monomer unit containing a hydrophobic group of the general formula (1), 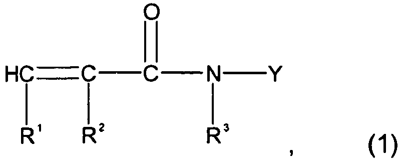 in which
R¹ denotes H,
R² denotes H or CH₃,
Y denotes H
and
R³ denotes phenyl, benzyl, phenylethyl or phenoxyethyl,
or
Y denotes H or CH₃
and
R³ denotes R⁴-CONHX, where
X denotes phenyl, benzyl or phenylethyl,
and
R⁴ denotes methylene, ethylene, propylene, acryloylphenyl-glycine or acryloylphenylalanine.

5. Separating material according to one or more of Claims 2 - 4, **characterised in that**
a) the copolymer contains 2-acrylamido-2-methylpropanesulfonic acid or/and 2-acrylamidoethanesulfonic acid as monomer unit having a negative charge,
b) the ratio of the monomer units having a negative charge to the monomer units containing a hydrophobic phenyl, benzyl or phenylethyl group is in a range between 70 : 30 and 30 : 70.

6. Separating material according to one or more of Claims 2 - 4, **characterised in that**
a) the copolymer contains acrylic acid or/and methacrylic acid as monomer unit having a negative charge, and
b) the molar ratio of the monomer units having a negative charge to the monomer units containing a hydrophobic phenyl, benzyl or phenylethyl group is in a range between 95 : 5 and 70 : 30.

7. Separating material according to one or more of Claims 2 - 4, **characterised in that**
a) the copolymer contains a monomer from the series 2-acrylamido-2-methylpropanesulfonic acid and 2-acrylamidoethanesulfonic acid as monomer unit having a negative charge and
b) a monomer from the series acrylic acid and methacrylic acid and
c) the molar ratio of the monomer units having a negative charge to the monomer units containing a hydrophobic phenyl, benzyl or phenylethyl group is in a range between 95:5 and 30:70.

8. Process for the preparation of separating materials according to one or more of Claims 2 - 7, **characterised in that** at least one monomer unit containing a functional group having a negative charge is graft-polymerised with at least one monomer unit containing a hydrophobic group, and optionally with a neutral monomer having hydrophilic properties, onto a hydroxyl-containing organic polymer as support material in a one- or multistep reaction.

9. Process according to Claim 8, **characterised in that** at least one monomer unit containing a functional group having a negative charge is dissolved in dilute acid with at least one monomer unit containing a hydrophobic group, and optionally with a neutral monomer having hydrophilic properties, with addition of a cosolvent from the series acetone, dimethylacetamide, dimethylformamide, dioxane, tetrahydrofuran in the presence of cerium(IV) ions and graft-polymerised onto a hydroxyl-containing base support.

10. Process for the preparation of separating materials according to Claim 8 or 9, **characterised in that**
a) at least one monomer containing a carboxyl group of the general formula (1), 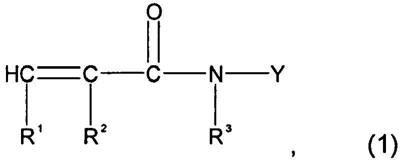 in which
R¹, R² and Y, independently of one another,
denote H or CH₃,
R³ denotes R⁴-COOM
and
R⁴ denotes straight-chain or branched alkylene having 2 to 4 C atoms and
M denotes H, Na, K or NH₄,
and/or a monomer containing a carboxyl group of the general formula (2), 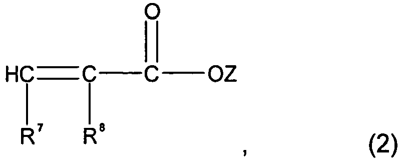 in which
R⁷ and R⁸, independently of one another, denote H or CH₃, or
R⁷ denotes COOM if Z = M and R⁸ = H,
Z denotes either M or R⁴-COOM, where
R⁴ denotes straight-chain or branched alkylene having 2 to 4 C atoms,
and
M denotes H, Na, K or NH₄,
optionally together with a water-soluble monomer, is graft-polymerised onto a hydroxyl-containing organic polymer as support material, and
b) some of the graft-polymerised carboxyl groups are subsequently converted into amide groups by coupling to an amine.

11. Process according to Claim 10 for the preparation of separating materials according to one or more of Claims 2 - 7, **characterised in that**
a) at least one monomer containing a carboxyl group of the general formula (1), 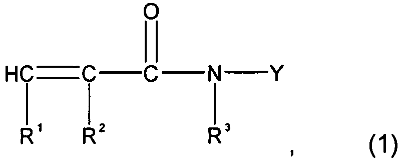 in which
R¹, R² and Y, independently of one another, denote H or CH₃,
R³ denotes R⁴-COOM,
R⁴ denotes straight-chain or branched alkylene having 2 to 4 C atoms and
M denotes H, Na, K or NH₄,
and/or of the general formula (2), 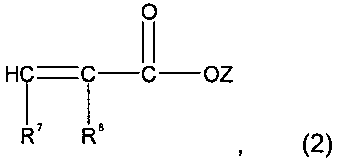 in which
R⁷ and R⁸, independently of one another, denote H or CH₃,
or
R⁷ denotes COOM if Z = M and R⁸ = H
Z denotes M or R⁴-COOM
R⁴ denotes straight-chain or branched alkylene having 2 to 4 C atoms,
and
M denotes H, Na, K or NH₄,
optionally together with a further water-soluble monomer, is dissolved in water so that the proportion of negatively charged groups is 1 to 100 mol% in relation to the total amount of monomer,
b) the resultant solution is mixed with the support material in such a way that 0.05 to 100 mol of total monomer are employed per litre of sedimented support material,
c) cerium(IV) salt dissolved in mineral acid is added to the resultant suspension, causing a pH in the range from 0 - 5 to arise, and a cerium(IV) concentration of 0.00001 - 0.5 mol/l, preferably 0.001 - 0.1 mol/l, and
d) the reaction mixture is graft-polymerised within a time of 0.5 to 72 hours and
e) an amine or an amine mixture is employed for the modification of the graft-polymerised carboxyl groups by coupling, and
f) that the total amount of amine is employed in a molar ratio of 0.01 to 100 : 1 to the carboxyl groups bonded to the support and is converted into amide groups in the presence of a coupling reagent, which is employed in a molar ratio of 0.01 : 1 to 20 : 1 to the charged groups bonded to the support, and
g) an alkyl-, aryl- or arylalkylamine having 6 to 18 C atoms from the group aniline, benzylamine, 4-fluorobenzylamine, 4-methoxybenzylamine, naphthylmethylamine, phenacylamine, phenylethylamine, phenoxyethylamine, tryptamine or tyramine as free amine or as hydrochloride is employed for the coupling.

12. Ion exchange chromatography column, having a separating material according to one or more of Claims 2 - 7.

13. Use of the separating materials according to one or more of Claims 2 - 7 in an ion exchange chromatography column.

14. Use of the separating materials according to one or more of Claims 2 - 7 for separating biopolymers off from liquid media.

15. Use according to Claim 13, **characterised in that** the biopolymer is dissolved in an aqueous liquid which has an electrolytic conductivity of 1 to 20 mS/cm and a pH of greater than 4.

16. Use according to one or more of Claims 13 to 15, **characterised in that** the biopolymer bonded to the separating material by interaction with the ionic and hydrophobic groups is desorbed either by
a) increasing the ion strength and/or
b) by modifying the pH
in the solution
and/or
c) through the use of an eluent having a different polarity to that of the adsorption buffer.

## Revendications

1. Utilisation de matériaux de séparation pour une chromatographie par échange d'ions dans une colonne de chromatographie par échange d'ions, dans laquelle lesdits matériaux de séparation pour chromatographie par échange d'ions basés sur des supports de base organiques de polymère contenant de l'hydroxyle comportent des copolymères liés de façon covalente sur la surface des supports de base et les matériaux de séparation sont **caractérisés en ce que** :
a) le support de base contient des groupes hydroxyle aliphatiques,
b) les copolymères liés de façon covalente sont liés au support via une unité de monomère terminale,
c) les copolymères contiennent au moins deux unités de monomère différentes,
d) les unités de monomère sont reliées de façon linéaire,
e) le copolymère contient au moins une unité de monomère qui est porteuse d'une charge négative sous la forme d'un acide sulfonique ou d'un acide carboxylique et en outre, contient des groupes ester ou amide et des groupes alkyle et/ou alkylène et au total un maximum de 8 atomes de C, mais pas de groupes aryle,
ou
qui est porteuse d'une charge négative sous la forme d'un acide sulfonique ou d'un acide carboxylique et en outre, contient des groupes alkyle et/ou alkylène mais pas de groupes aryle,
f) le copolymère contient au moins une unité de monomère qui est porteuse, en tant que groupe hydrophobe, d'un alkyle en chaîne droite ou ramifié comportant jusqu'à 4 à 18 atomes de C ou des groupes aryle correspondants et contient des groupes ester ou amide
et
g) le rapport des unités de monomère présentant une charge négative sur les unités de monomère contenant un groupe hydrophobe est dans une plage de 99 : 1 à 10 : 90.

2. Matériaux de séparation pour une chromatographie par échange d'ions basés sur des supports de base organiques de polymère contenant de l'hydroxyle sur les surfaces desquels des copolymères sont liés de façon covalente, **caractérisés en ce que** :
a) le support de base contient des groupes hydroxyle aliphatiques,
b) les copolymères liés de façon covalente sont liés au support via une unité de monomère terminale,
c) les copolymères contiennent au moins deux unités de monomère différentes,
d) les unités de monomère sont reliées de façon linéaire,
e) le copolymère contient au moins une unité de monomère qui est porteuse d'une charge négative sous la forme d'un acide sulfonique ou d'un acide carboxylique et en outre, contient des groupes ester ou amide et des groupes alkyle et/ou alkylène et au total un maximum de 8 atomes de C, mais pas de groupes aryle,
ou
qui est porteuse d'une charge négative sous la forme d'un acide sulfonique ou d'un acide carboxylique et en outre, contient des groupes alkyle et/ou alkylène mais pas de groupes aryle, où le copolymère comporte au moins une unité de monomère présentant une charge négative, soit de la formule générale (1) : 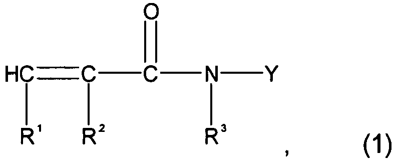 dans laquelle :
R¹, R² et Y, indépendamment les uns des autres, représentent H ou CH₃,
R³ représente R⁴-SO₃M ou R⁴-COOM,
R⁴ représente alkylène en chaîne droite ou ramifié comportant 2 à 4 atomes de C
et
M représente H, Na, K ou NH₄,
soit de la formule générale (2) : 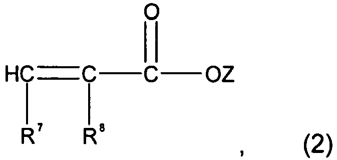 dans laquelle :
R⁷ et R⁸, indépendamment l'un de l'autre,
représentent H ou CH₃ ou
R⁷ représente COOM si Z = M et R⁸ = H,
Z représente soit M, soit R⁴-COOM, soit R⁴-SO₃M, où
R⁴ représente alkylène en chaîne droite ou ramifié comportant 2 à 4 atomes de C,
et
M représente H, Na, K ou NH₄,
ou au moins dans chaque cas, une unité de monomère de la formule générale (1) et de la formule générale (2)
et
f) le copolymère contient au moins une unité de monomère qui comporte, en tant que groupe hydrophobe, un alkyle en chaîne droite ou ramifié comportant 4 à 18 atomes de C ou des groupes aryle correspondants et contient des groupes amide,
où
le copolymère contient au moins une unité de monomère de la formule générale (1) qui comporte un groupe hydrophobe qui imprime un caractère hydrophobe au copolymère, 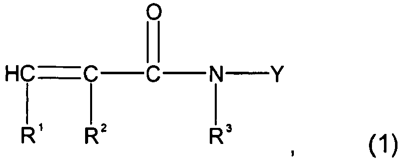 dans laquelle :
R¹ représente H ou COOM,
R² représentes H ou CH₃,
Y et R³ représentent alkyle en chaîne droite ou ramifié comportant jusqu'à 18 atomes de C,
où Y et R³ sont porteurs en association d'au moins 6 atomes de C,
ou
Y représente H
et
R³ représente alkyle en chaîne droite ou ramifié comportant 6 à 18 atomes de C, ou
Y représente H
et
R³ représente aryle or R⁶-aryle
ou
Y représente H ou CH₃
et
R³ représente R⁴-CONHX,
X représente alkyle en chaîne droite ou ramifié comportant 6 à 18 atomes de C, aryle ou R⁶-aryle,
R⁴ représente alkylène en chaîne droite ou ramifié comportant 2 à 4 atomes de C,
R⁶ représente un alkylène en chaîne droite ou ramifié comportant 1 à 4 atome(s) de C, où un groupe méthylène peut être remplacé par O et peut être substitué par COOM
et
M représente H, Na, K ou NH₄
et
g) le rapport des unités de monomère présentant une charge négative sur les unités de monomère contenant un groupe hydrophobe est dans une plage de 99 : 1 à 10 : 90.

3. Matériaux de séparation selon la revendication 2, **caractérisés en ce que** :
c) les copolymères contiennent au moins deux unités de monomère différentes,
e) le copolymère comporte au moins une unité de monomère présentant une charge négative prise parmi la série acide 2-acrylamido-2-méthylpropanesulfonique, acide 2-acrylamidoéthanesulfonique, carboxyméthylacrylamide, carboxyéthylacrylamide, carboxypropylacrylamide, carboxyméthylméthacrylamide, carboxyéthylméthacrylamide, carboxypropylméthacrylamide, acide maléique, acide acrylique et acide méthacrylique et
f) le copolymère comporte au moins une unité de monomère contenant un groupe hydrophobe, de la formule générale (1) : 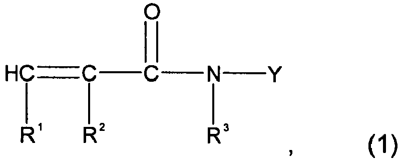 dans laquelle :
R¹ représente H,
R² représente H ou CH₃,
Y représente H
et
R³ représente aryle ou R⁶-aryle,
ou
Y représente H ou CH₃
et
R³ représente R⁴-CONHX, où
X représente aryle ou R⁶-aryle,
R⁴ représente méthylène, éthylène, propylène et
R⁶ représente un alkylène en chaîne droite ou ramifié comportant 1 à 4 atome(s) de C, où un groupe méthylène peut être remplacé par O et peut être substitué par COOM
et
M représente H, Na, K ou ammonium.

4. Matériaux de séparation selon la revendication 2 ou 3, **caractérisés en ce que**:
c) les copolymères contiennent au moins deux unités de monomère différentes,
e) le copolymère comporte au moins une unité de monomère présentant une charge négative prise parmi la série acide 2-acrylamido-2-méthylpropanesulfonique, acide 2-acrylamidoéthanesulfonique, carboxyméthylacrylamide, carboxyéthylacrylamide, carboxypropylacrylamide, carboxyméthylméthacrylamide, carboxyéthylméthacrylamide, carboxypropylméthacrylamide, acide maléique, acide acrylique et acide méthacrylique et
f) le copolymère comporte au moins une unité de monomère contenant un groupe hydrophobe de la formule générale (1) : 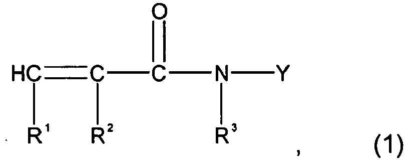 dans laquelle :
R¹ représente H,
R² représente H ou CH₃,
Y représente H
et
R³ représente phényle, benzyle, phényléthyle ou phénoxyéthyle,
ou
Y représente H ou CH₃
et
R³ représente R⁴-CONHX, où
X représente phényle, benzyle ou phényléthyle,
et
R⁴ représente méthylène, éthylène, propylène, acryloylphényl-glycine ou acryloylphénylalanine.

5. Matériau de séparation selon une ou plusieurs des revendications 2 - 4, **caractérisé en ce que** :
a) le copolymère contient acide 2-acrylamido-2-méthylpropanesulfonique ou/et acide 2-acrylamidoéthanesulfonique en tant qu'unité de monomère présentant une charge négative,
b) le rapport des unités de monomère présentant une charge négative sur les unités de monomère contenant un groupe phényle, benzyle ou phényléthyle hydrophobe est dans une plage entre 70 : 30 et 30 : 70.

6. Matériau de séparation selon une ou plusieurs des revendications 2 - 4, **caractérisé en ce que**
a) le copolymère contient de l'acide acrylique ou/et méthacrylique en tant qu'unité de monomère présentant une charge négative, et
b) le rapport molaire des unités de monomère présentant une charge négative sur les unités de monomère contenant un groupe phényle, benzyle ou phényléthyle hydrophobe est dans une plage entre 95 : 5 et 70 : 30.

7. Matériau de séparation selon une ou plusieurs des revendications 2 - 4, **caractérisé en ce que**
a) le copolymère contient un monomère pris parmi la série acide 2-acrylamido-2-méthylpropanesulfonique et acide 2-acrylamidoéthanesulfonique en tant qu'unité de monomère présentant une charge négative et
b) un monomère pris parmi la série acide acrylique et acide méthacrylique et
c) le rapport molaire des unités de monomère présentant une charge négative sur les unités de monomère contenant un groupe phényle, benzyle ou phényléthyle hydrophobe est dans une plage entre 95 : 5 et 30 : 70.

8. Procédé pour la préparation de matériaux de séparation selon une ou plusieurs des revendications 2 - 7, **caractérisé en ce qu'**au moins une unité de monomère contenant un groupe fonctionnel présentant une charge négative est polymérisée par greffe avec au moins une unité de monomère contenant un groupe hydrophobe, et en option avec un monomère neutre présentant des propriétés hydrophiles, sur un polymère organique contenant hydroxyle en tant que matériau de support selon une réaction mono-étape ou multi-étape.

9. Procédé selon la revendication 8, **caractérisé en ce qu'**au moins une unité de monomère contenant un groupe fonctionnel présentant une charge négative est dissoute dans un acide dilué avec au moins une unité de monomère contenant un groupe hydrophobe, et en option avec un monomère neutre présentant des propriétés hydrophiles, avec ajout d'un cosolvant pris parmi la série acétone, diméthylacétamide, diméthylformamide, dioxane, tétrahydrofurane en présence d'ions de cérium(IV) et est polymérisée par greffe sur un support de base contenant un hydroxyle.

10. Procédé pour la préparation de matériaux de séparation selon la revendication 8 ou 9, **caractérisé en ce que** :
a) au moins un monomère contenant un groupe carboxyle de la formule générale (1), 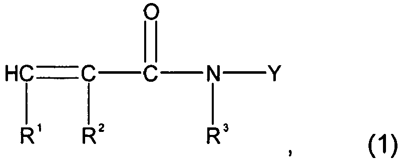 dans laquelle :
R¹, R² et Y, indépendamment les uns des autres, représentent H ou CH₃,
R³ représente R⁴-COOM et
R⁴ représente alkylène en chaîne droite ou ramifié comportant 2 à 4 atomes de C et
M représente H, Na, K ou NH₄,
et/ou un monomère contenant un groupe carboxyle de la formule générale (2), 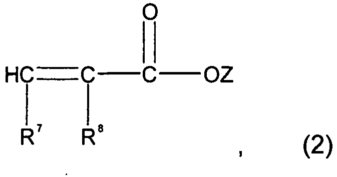 dans laquelle :
R⁷ et R⁸, indépendamment l'un de l'autre, représentent H ou CH₃, ou
R⁷ représente COOM si Z = M et R⁸ =H,
Z représente soit M, soit R⁴-COOM, où
R⁴ représente alkylène en chaîne droite ou ramifié comportant de 2 à 4 atomes de C,
et
M représente H, Na, K ou NH₄,
en option en association avec un monomère soluble à l'eau, est/ont polymérisé(s) par greffe sur un polymère organique contenant hydroxyle en tant que matériau de support, et
b) certains des groupes carboxyle polymérisés par greffe sont ensuite convertis selon des groupes amide par couplage sur un amine.

11. Procédé selon la revendication 10 pour la préparation de matériaux de séparation selon une ou plusieurs des revendications 2 - 7, **caractérisé en ce que**:
a) au moins un monomère contenant un groupe carboxyle de la formule générale (1), 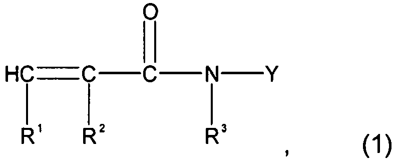 dans laquelle
R¹, R² et Y, indépendamment les uns des autres, représentent H ou CH₃,
R³ représente R⁴-COOM
R⁴ représente alkylène en chaîne droite ou ramifié comportant 2 à 4 atomes de C et
M représente H, Na, K ou NH₄,
et/ou de la formule générale (2), 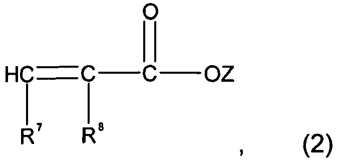 dans laquelle
R⁷ et R⁸, indépendamment l'un de l'autre, représentent H ou CH₃,
ou
R⁷ représente COOM si Z = M et R⁸ =H,
Z représente M ou R⁴-COOM,
R⁴ représente alkylène en chaîne droite ou ramifié comportant 2 à 4 atomes de C,
et
M représente H, Na, K ou NH₄,
en option en association avec un autre monomère soluble dans l'eau, est dissout dans l'eau de telle sorte que la proportion des groupes chargés négativement soit de 1 à 100 mol% en relation avec la quantité totale de monomère,
b) la solution résultante est mélangée avec le matériau de support de telle sorte que 0,05 à 100 mol de monomère total soient employés par litre de matériau de support sédimenté,
c) du sel de cérium(IV) dissout dans de l'acide minéral est ajouté à la suspension résultante, d'où l'obtention d'un pH dans la plage de 0 - 5, et d'une concentration en cérium(IV) de 0,00001 - 0,5 mol/l, de préférence 0,001 - 0,1 mol/l, et
d) le mélange de réaction est polymérisé par greffe en un temps de 0,5 à 72 heures et
e) un amine ou un mélange d'amines est employé pour la modification des groupes carboxyle polymérisés par greffe par couplage, et **en ce que** :
f) la quantité totale d'amine est employée selon un rapport molaire de 0,01 à 100 : 1 pour les groupes carboxyle liés au support et est convertie selon des groupes amine en présence d'un réactif de couplage, lequel est employé selon un rapport molaire de 0,01 : 1 à 20 : 1 pour les groupes chargés liés au support, et
g) un alkylamine, arylamine ou arylalkylamine comportant 6 à 18 atomes de C pris parmi le groupe aniline, benzylamine, 4-fluorobenzylamine, 4-méthoxybenzylamine, naphtylméthylamine, phénacylamine, phényléthylamine, phénoxyéthylamine, tryptamine ou tyramine en tant qu'amine libre ou en tant qu'hydrochlorure est employé pour le couplage.

12. Colonne de chromatographie par échange d'ions contenant un matériau de séparation selon une ou plusieurs des revendications 2-7.

13. Utilisation des matériaux de séparation selon une ou plusieurs des revendications 2-7 dans une colonne de chromatographie par échange d'ions.

14. Utilisation des matériaux de séparation selon une ou plusieurs des revendications 2-7 pour séparer des biopolymères de milieux liquides.

15. Utilisation selon la revendication 13, **caractérisée en ce que** le biopolymère est dissout dans un liquide aqueux qui présente une conductivité électrolytique de 1 à 20 mS/cm et un pH supérieur à 4.

16. Utilisation selon une ou plusieurs des revendications 13 à 15, **caractérisée en ce que** le biopolymère lié au matériau de séparation par interaction avec les groupes ioniques et hydrophobes est désorbé soit par
a) augmentation de la force ionique et/ou par
b) modification du PH dans la solution et/ou
c) par l'intermédiaire de l'utilisation d'un éluant présentant une polarité différente de celle du tampon d'adsorption.
